# EUROPEAN PATENT APPLICATION

(11) **EP 4 510 598 A1**
(43) Date of publication of application: **19.02.2025**
(21) Application number: 24196042.6
(22) Date of filing: 26.05.2017
(51) Int. Cl.: H04N 21/44, H04N 21/4722, H04N 21/81, G06F 16/783, G06F 3/14, G09G 3/00, H04N 21/41, H04N 21/4223, H04N 21/431, H04N 21/436, H04N 21/435

(54) **METHODS AND SYSTEMS FOR SELECTING SUPPLEMENTAL CONTENT FOR DISPLAY NEAR A USER DEVICE DURING PRESENTATION OF A MEDIA ASSET ON THE USER DEVICE**

(30) Priority: 27.05.2016 US 201615167035; 27.05.2016 US 201615167146
(62) Divisional of application: 17729971.6
(71) Applicant: Adeia Guides Inc., San Jose, CA 95134 (US)
(72) Inventor: LIN, Edison, Menlo Park, 94025 (US)
(74) Representative: Haley Guiliano International LLP

(57) **Abstract**

Methods and systems are provided herein for selecting supplemental content for display near a user device during presentation of a media asset on die user device. Often, the playback of the media asset when displayed at the user's home is limited to a single display, such as on a television or tablet. By selecting supplemental content for display near a user device during presentation of the media asset, the playback of the media asset will encompass multiple displays and provide a more immersive viewing experience for the user.

## Description

### Cross-Reference to Related Application :

This application claims priority to U.S. Utility Patent Application No. 15/167,035, filed May 27, 2016, and U.S. Utility Patent Application No. 15/167,146, filed May 27, 2016. The contents of these applications are hereby incorporated herein in their entirety.

### Background

While seeing a movie in a movie theater provides the user with an immersive viewing experience, with large displays and surround sound systems, the user's viewing experience at home is far less immersive. This is due to a combination of factors, including the limited size of television for both technical and practical reasons. It is necessary to find alternative ways to provide an alternative viewing experience to the user that is equally immersive but more appropriate for home environments.

One of the problems with increasing the size of displays in a user's home is lack of space. Televisions have a limit, in size, whether it is for technical or practical reasons. Projectors can provide larger displays if there is available wall space, but require more considerations such as the dimensions of the available wall space and how to arrange the room such that the projector can project onto the wall without being blocked by another piece of furniture. In order to provide an immersive display, it is necessary to provide a system that can overcome these issues.

### Summary

The traditional television set up at a user's home is limited and may fail to provide an immersive viewing experience to the user. By providing supplemental content to be displayed near the user device, the display of the media asset is expanded to include a more immersive viewing experience. This display of additional content to provide an immersive experience is done by determining what supplemental content to display and determining where to display it for the full effect of the user. Rather than have a single display of content on the television, the methods and system provided herein describe determining which supplemental content is relevant and where to display the supplemental content in the room around the user to maximize the user's immersive viewing experience.

In some aspects, methods and systems are provided herein for selecting supplemental content for display near a user device during presentation of a media asset on the user device. Often, the playback of the media asset when displayed at the user's home is limited to a single display, such as on a television or tablet. By selecting supplemental content for display near a user device during presentation of the media asset, the playback of the media asset will encompass multiple displays and provide a more immersive viewing experience for the user.

In some aspects, methods and systems are provided herein for a media guidance application for selecting supplemental content for display near a user device during presentation of a media asset on the user device. The media guidance application monitors one or more frames during presentation of the media asset on the user device. The user device may be a television, a tablet, a smart phone or any other user device that displays a media asset. The media guidance application may run locally on the user device, on a remote server connected to the user device, or any combination thereof. For example, the media guidance application may monitor, via the remote server, the movie as it is displayed on the television. The media guidance application selects a frame during presentation of the media asset indicative of a new scene in the media asset. For example, the media guidance application may, through the monitoring of the movie, select a frame that starts a new scene of the movie. In another example, the movie or other media asset may have tags indicating each new scene and through monitoring the movie and the scene tags, the media guidance application may select a frame that has been tagged as starting a new scene.

The media guidance application identifies at least one of an object and a location represented in the selected frame. For example, the media guidance application may analyze the frame to determine objects in the frame. In some embodiments, the media guidance application identifies key features in the selected frame. The key features are pieces of information describing elements of the frame and may describe specific structural elements such as edges, corners, points, lines, ridges, or regions of the image present in the frame. For example, the media guidance application may analyze the frame using edge detection and determine the presence of a series of edges in the frame. In some embodiments, the media guidance application compares the identified key features to an objects database. For example, the media guidance application may access a database that includes objects associated with key features such as edges, and compare the edges found in the frame with the edges associated with each object in the database of objects. In some embodiments, the media guidance application identifies the object in the selected frame based on the comparing. For example, based on the comparing, the media guidance application may determine that some of the edges found in the frame are associated with a tree. In another example, the media guidance application may determine that some of the edges found in the frame are associated with a bird.

In some embodiments, the media guidance application searches an actions database based on the object in the selected frame. For example, the media guidance application may search an actions database associating objects with actions, searching for any actions associated with a bird. In some embodiments, the media guidance application identifies an action associated with the object that is occurring in the selected frame. For example, based on the actions database, the media guidance application may identify that a bird in the orientation as shown in the frame is associated with the action of flying, rather than being perched on a tree branch. In another example, the media guidance application may identify the action of sailing based on identifying a ship in the frame.

In some embodiments, the media guidance application searches a location database for a location associated with the object. For example, the media guidance application may search the locations database for a location that is associated with a tree. In some embodiments, the media guidance application identifies the location in the selected frame based on the location associated with the object. For example, the media guidance application may determine that the location associated with the frame is a generic outside scene in a tropical climate based on the presence of a lone palm tree.

In some embodiments, the media guidance application compares the key features of the selected frame to a location database that includes analysis of representations of locations. The key features are pieces of information describing elements of the frame and may describe specific structural elements such as edges, corners, points, lines, ridges, or regions of the image present in the frame. For example, the media guidance application may analyze the frame to determine features of the image of the frame. In some embodiments, the media guidance application determines the location represented in the selected frame based on comparing the key features of the selected frame to the analysis of representations of locations. For example, the media guidance application may determine based on the features of the image that the frame is displaying a forest.

The media guidance application determines plot information associated with the at least one of the object and the location. For example, the media guidance application may determine keywords associated with the plot based on the object identified in the scene. In some embodiments, the media guidance application searches a plot information database to identify plot information associated with the at least one of the object and the location, and the action occurring in the selected frame. The plot information may include keywords describing a plot of the selected frame. For example, if the media guidance application identified a cruise ship, palm trees, and clouds to determine the action of sailing and the location of a generic tropical climate, the media guidance application may search the plot information database and identify the plot information in the form of the keywords, "desert island", "ocean", "ship", "sailing", "storm", and "waves". In some embodiments, the guidance application determines common keywords associated with the at least one of the object and the location, and the action. For example, the location of a generic tropical climate or action of sailing may be associated with additional plot information such as "fishing". However, as "fishing" is not associated with any of the objects identified, cruise ship, palm trees, and clouds, it is not a common keyword. In some embodiments, the media guidance application determines identified plot information based on the common keywords.

In some embodiments, the media guidance application retrieves metadata associated with the selected frame. The metadata can include closed captioning data and tags associated with the selected frame. In some embodiments, the media guidance application searches a plot information database for plot information associated with the at least one of the object and the location, and the metadata. For example, the media guidance application may retrieve closed captioning associated with the scene and search the plot information database for plot information keywords associated with the terms identified in the closed captioning data.

The media guidance application identifies, from a database, the supplemental content to accompany the media asset based on the plot information. For example, the media guidance application may identify supplemental content with a tropical island and the ocean based on the plot information. The supplemental content may be a specific background image to be displayed on the wall of the room near the television or a set of images with a common theme to be displayed around an area based on the regions determined to be available. The supplemental content may include visual images as well as alternate forms of media such as a set of sounds, video clips, or combination thereof, which can be played as needed.

The media guidance application transmits, to a projection device, the supplemental content for display near the user device during presentation of the media asset. For example, the media guidance application may transmit the supplemental content displaying a tropical island and an ocean to be displayed on the wall via projector. The media guidance display may transmit the supplemental content to any display device in the area of the user device, such as another television screen, a tablet, or a set of augmented reality glasses. In some embodiments, the media guidance application transmits, to a speaker, a set of sounds that is included in the supplemental content. For example, the media guidance application may also transmit sounds of waves to the speakers.

In some embodiments, the media guidance application creates new supplemental content from a portion of the selected frame. In some embodiments, the media guidance application stores the new supplemental content in the database along with common keywords associated with the at least one of the object and the location. For example, the media guidance application may create new supplemental content using a section of the frame that shows blue sky and clouds, and store the supplemental content in the supplemental content database associated with the plot information that is found associated with clouds in the plot information database.

In some embodiments, the media guidance application selects a next frame during presentation of the media asset indicative of a next scene. For example, the media guidance application may select the frame associated with the next tag indicating a new scene. In some embodiments, the media guidance application determines a duration of the new scene based on the selected frame and the selected next frame. For example, the media guidance application may determine the length of the scene by comparing the frame of the first new scene and the frame that starts the next new scene. In some embodiments, the media guidance application transmits the supplemental content for display for the duration of the new scene. For example, the media guidance application may maintain the display of the supplemental content until the movie reaches the point in playback with the start of the next new scene.

In some aspects, methods and systems are provided herein for a media guidance application for determining a region near a user device for displaying supplemental content during presentation of a media asset on the user device. Traditionally, there is only a single display of content in the room for the user. This system determines where in the area around the user device to display the supplemental content to ensure an immersive viewing experience. Doing so requires monitoring of the area around the user device, determining which regions are available for the display of the supplemental content, and determining which supplemental content to display in which regions around the user device.

In some aspects, the media guidance application monitors, using a camera device, one or more regions near the user device. The media guidance application may run locally on the user device, on a remote server connected to the user device, or any combination thereof. For example, the media guidance application may analyze, via the remote server, the room around the television based on camera feedback, identify sections of the room with walls or other surfaces that may be available for supplemental content, and monitor those sections.

The media guidance application determines dimensions for each of the one or more regions near the user device based on the monitoring. For example, the media guidance application may calculate the dimensions, size, and orientation of the walls and available surfaces around the room based on analysis of the room and monitoring. In some embodiments, the media guidance application analyzes the one or more regions near the user device for one or more portions that are suitable to display the supplemental content. For example, the media guidance application may identify a wall that is clear of any obstruction such as a painting hanging on the wall or a bookcase in the middle, and analyze the wall based on whether the wall section is available for the display of supplemental content. In some embodiments, the media guidance application selects a portion that is suitable for displaying the supplemental content based on the analysis. For example, the media guidance application may select an area of the wall that is not obstructed and therefore available to display supplemental content. In some embodiments, the media guidance application determines dimensions indicating the size, the shape, and the orientation of the one or more regions for the selected portion. For example, the media guidance application may select a region on the ceiling to be available for display of supplemental content and determine the dimensions, including the size of the space, as well as the orientation facing downwards and the shape of a donut so that the center fan or ceiling light is not included in the selected region.

The media guidance application retrieves supplemental content associated with a scene of the media asset being presented on the user device. For example, the media guidance application may retrieve supplemental content associated with the scene of a movie playing on the television from the supplemental content database. In some embodiments, the media guidance application identifies at least one of an object and a location represented in the scene. In some embodiments, the media guidance application identifies plot information associated with the scene based on the identified at least one of the object and the location. In some embodiments, the media guidance application searches a database of supplemental content for a supplemental content matching the plot information associated with the scene.

The media guidance application identifies dimensions of the supplemental content. For example, the media guidance application may determine the intended dimensions of the supplemental content based on tags associated with the supplemental content. In some embodiments, the media guidance application identifies one of a size, a shape, and an orientation of the supplemental content. For example, some supplemental content may be oriented to be seen from below or other supplemental content may be shaped like a donut.

The media guidance application compares the dimensions of the supplemental content to the dimensions for each of the one or more regions. In some embodiments, the media guidance application compares the dimensions of the supplemental content to the dimensions for each of the one or more regions, further comprises comparing the one of the size, the shape, and the orientation of each of the one or more regions to the one of the size, the shape, and the orientation of the supplemental content. For example, the media guidance application may compare the shape of the region to the shape of the supplemental content or the orientation of the region to the orientation of the supplemental content.

The media guidance application filters a subset of the one or more regions based on the comparing. For example, the media guidance application may filter the regions to identify the region that is available to display the identified supplemental content. In some embodiments, the media guidance application identifies an object associated with one of the one or more regions. For example, the media guidance application may identify that there is a bookcase in the region. In some embodiments, the media guidance application compares the object to known objects to determine whether the object is available to display the supplemental content. For example, the media guidance application may identify blinds covering a window, and after searching through the database of known objects, determine that the blinds covering a window are available to display supplemental content. In some embodiments, the media guidance application determines that the object is not available to display the supplemental content based on the comparing. For example, the media guidance application may search through a database of known objects to determine that the supplemental cannot be displayed on top of a bookcase. In some embodiments, the media guidance application removes the one of the one or more regions from the one or more regions. For example, the media guidance application may filter out the region with a bookcase from the regions available for display of supplemental content.

In some embodiments, the media guidance application identifies one of the one or more regions by identifying the one or more regions in which the size, the shape, and the orientation does not match the one of the size, the shape, and the orientation of the supplemental content. For example, the media guidance application may determine that the region is in the shape of a donut but the supplemental content is in the shape of a rectangle and so the supplemental content does not fit within the region. In some embodiments, the media guidance application removes the one of the one or more regions from the one or more regions. For example, the media guidance application may filter out the region that is in the shape of a donut from the regions available for display of supplemental content.

The media guidance application transmits, to a projection device, the supplemental content for display in the subset of the one or more regions near the user device. In some embodiments, the media guidance application transmits the supplemental content for display on each of the subset of the one or more regions. For example, the media guidance application may display the supplemental content on all of the remaining regions of the room that have been identified to be free of objects and are the appropriate size, shape, and orientation.

In some embodiments, the media guidance application ranks each of the subset of the one or more regions based on at least one of the dimensions of each region, location of each region, or content of supplemental content. For example, if the supplemental content is a wide landscape, the media guidance application may rank the regions and prioritize regions that are a large rectangle on the wall, rather than the ceiling. In some embodiments, the media guidance application determines one of the subset of the one or more regions to display the supplemental content based on the ranking. For example, the media guidance application may select the region that received the highest ranking. In some embodiments, the media guidance application transmits for display the supplemental content on the one of the subset of the one or more regions. For example, the media guidance application may display the supplemental content on the selected region that received the highest ranking.

In some embodiments, the media guidance application determines a plurality of portions of the supplemental content. For example, the supplemental content may be multiple images of different birds, each in different orientations, sizes and shapes. In some embodiments, the media guidance application matches each of the plurality of portions of the supplemental content to one of the subset of the one or more regions. For example, the media guidance application may match each of the images of birds to a region around the room based on the image's size, shape, and orientation. In some embodiments, the media guidance application generates for display each of the plurality of portions of the supplemental content on the corresponding one of the subset of the plurality of spaces. For example, the media guidance application may display each of the images on the corresponding regions around the room.

It should be noted that the systems, methods, apparatuses, and/or aspects described above may be applied to, or used in accordance with, other systems, methods, apparatuses, and/or aspects.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 shows an illustrative example of a display of supplemental content near a user device, in accordance with some embodiments of the disclosure;
FIG. 2 shows an illustrative example of a display of supplemental content near a user device in available regions near a user device, in accordance with some embodiments of the disclosure;
FIG. 3 shows an illustrative example of a supplemental content database showing supplemental content linked to plot information, in accordance with some embodiments of the disclosure;
FIG. 4 shows an illustrative example of regions available for the display of supplemental content near a user device, in accordance with some embodiments of the disclosure;
FIG. 5 shows an illustrative example of a display screen generated by a media guidance application, in accordance with some embodiments of the disclosure;
FIG. 6 shows another illustrative example of a display screen generated by a media guidance application, in accordance with some embodiments of the disclosure;
FIG. 7 is a block diagram of an illustrative user equipment device, in accordance with some embodiments of the disclosure;
FIG. 8 is a block diagram of an illustrative media system, in accordance with some embodiments of the disclosure;
FIG. 9 is a flowchart of illustrative steps involved in selecting supplemental content for display near a user device during presentation of a media asset on the user device, in accordance with some embodiments of the disclosure;
FIG. 10 is a flowchart of illustrative steps for determining plot information associated with the selected frame, in accordance with some embodiments of the disclosure;
FIG. 11 is another flowchart of illustrative steps for determining plot information associated with the selected frame, in accordance with some embodiments of the disclosure;
FIG. 12 is another flowchart of illustrative steps for determining plot information associated with the selected frame, in accordance with some embodiments of the disclosure;
FIG. 13 is a flowchart of illustrative steps involved in determining a region near a user device for displaying supplemental content during presentation of a media asset on the user device, in accordance with some embodiments of the disclosure; and
FIG. 14 is a flowchart of illustrative steps for filtering the regions to identify a subset of the regions near the user device available to display supplemental content, in accordance with some embodiments of the disclosure.

### Detailed Description

Methods and systems are provided herein for selecting supplemental content for display near a user device during presentation of a media asset on the user device. Often, the playback of the media asset when displayed at the user's home is limited to a single display, such as on a television or tablet. By selecting supplemental content for display near a user device during presentation of the media asset, the playback of the media asset will encompass multiple displays and provide a more immersive viewing experience for the user.

Methods and systems are provided herein for a media guidance application for determining a region near a user device for displaying supplemental content during presentation of a media asset on the user device. Traditionally, there is only a single display of content in the room for the user. This system determines where in the area around the user device to display the supplemental content to ensure an immersive viewing experience. Doing so requires monitoring of the area around the user device, determining which regions are available for the display of the supplemental content, and determining which supplemental content to display in which regions around the user device.

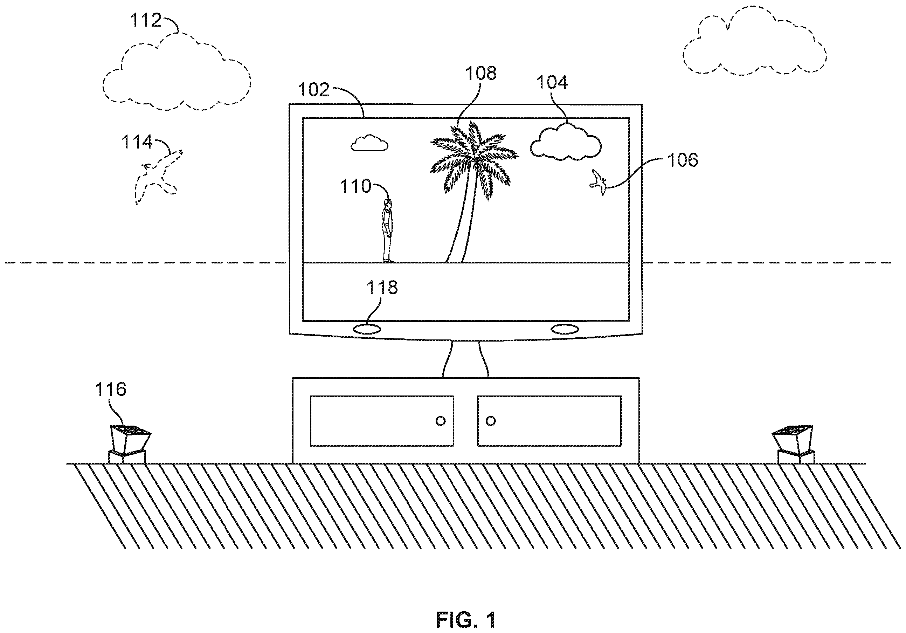

FIG. 1 shows an illustrative example of a display of supplemental content near a user device, in accordance with some embodiments of the disclosure. User device 102 may be a television, a tablet, a smart phone or any other user device which displays a media asset. User device 102 may, while displaying the media asset, display a frame which includes various objects, such as objects 104, 106, 108, or 110, which can include animals, scenery and characters. Once these objects 104, 106, 108, or 110 are identified and used to determine plot information to describe the scene displayed on user device 102, the media guidance application identifies supplemental content to display using projectors 116. The supplemental content may include similar features to the scene displayed on user device 102, such as objects 112 and 114 which match objects 104 and 106, respectively. The supplemental content may be visual images, as well as a set of sounds using speakers 118. Once the supplemental content including objects 112 and 114 has been identified in the supplemental content database, the supplemental content is transmitted to the projectors 116 and speakers 118 to be displayed near the user device 102 during the playback of the scene on user device 102. The media guidance application may run locally on the user device 102, on a remote server connected to the user device 102, or any combination thereof. The media guidance display may transmit the supplemental content to any display device in the area of the user device 102, such as another television screen, a tablet, or a set of augmented reality glasses.

The media guidance application monitors one or more frames during presentation of the media asset on the user device 102. The user device 102 may be a television, a tablet, a smart phone or any other user device 102 which displays a media asset. For example, the media guidance application may monitor the movie as it is displayed on the television. The media guidance application selects a frame during presentation of the media asset indicative of a new scene in the media asset. For example, the media guidance application may, through the monitoring of the movie, select a frame which starts a new scene of the movie. In another example, the movie or other media asset may have tags indicating each new scene and through monitoring the movie and the scene tags, the media guidance application may select a frame which has been tagged as starting a new scene.

The media guidance application identifies at least one of an object, such as objects 104, 106, 108, or 110 and a location represented in the selected frame. For example, the media guidance application may analyze the frame to determine objects in the frame. In some embodiments, the media guidance application identifies key features in the selected frame. The key features are pieces of information describing elements of the frame and may describe specific structural elements such as edges, comers, points, lines, ridges, or regions of the image present in the frame. For example, the media guidance application may analyze the frame using edge detection and determine the presence of a series of edges is present in the frame. The media guidance application may determine by analyzing the key features that object 104 is a cloud, object 106 is a bird, object 108 is a palm tree, or that object 110 is a person.

In some embodiments, the media guidance application searches in actions database based on the object, such as objects 104, 106, 108, and 110, in the selected frame. For example, the media guidance application may search an actions database associating objects with actions, searching for any actions associated with a bird. In some embodiments, the media guidance application identifies an action associated with the object which is occurring in the selected frame. For example, based on the actions database, the media guidance application may identify that object 106 is a bird associated with the action of flying, rather than being perched on a tree branch.

In some embodiments, the media guidance application searches a location database for a location associated with the object, such as objects 104, 106, 108, and 110. For example, the media guidance application may search the locations database for a location which is associated with an object 108 which is a palm tree. In some embodiments, the media guidance application identifies the location in the selected frame based on the location associated with the object 108. For example, the media guidance application may determine that the location associated with the frame is a generic outside scene in a tropical climate based on the presence of object 108, which is a lone palm tree.

In some embodiments, the media guidance application compares the key features of the selected frame to a location database which includes analysis of representations of locations. The key features are pieces of information describing elements of the frame and may describe specific structural elements such as edges, comers, points, lines, ridges, or regions of the image present in the frame. For example, the media guidance application may analyze the frame to determine features of the image of the frame. In some embodiments, the media guidance application determines the location represented in the selected frame based on comparing the key features of the selected frame to the analysis of representations of locations. For example, the media guidance application may determine, based on the features of the image, that the frame is displaying a forest.

The media guidance application determines plot information associated with the at least one of the object, such as the objects 104, 106, 108 and 110, and the location. For example, the media guidance application may determine keywords associated with the plot based on the object identified in the scene, such as the objects 104, 106, 108 and 110. In some embodiments, the media guidance application searches a plot information database to identify plot information associated with the at least one of the object, such as the objects 104, 106, 108 and 110, and the location, such as a generic tropical outdoor climate, and the action occurring in the selected frame, such as that object 106 is a bird in flight. The plot information may include keywords describing a plot of the selected frame. For example, the media guidance application may consider common keywords associated with the objects 104, 106, 108 and 110, and the location, such as a generic tropical outdoor climate, and the action occurring in the selected frame, such as that object 106 is a bird in flight, in order to determine the plot information "outdoor hike" and "desert island",

The media guidance application identifies, from a database, the supplemental content to accompany the media asset based on the plot information. For example, the media guidance application may identify supplemental content that includes similar elements to the ones displayed in the media asset such as objects 112 and 114 which match objects 104 and 106, respectively. The supplemental content may be a specific background image to be displayed on the wall of the room near the television or a set of images with a common theme to be displayed around an area based on the regions determined to be available. The supplemental content may include visual images, sounds, video clips, or combinations thereof. The supplemental content may included an alternate feed of a live event. For example, if the media asset is a sporting event, being displayed live, the supplemental content to be displayed may include live fan reactions to the sporting event as it occurs.

The media guidance application transmits, to a projection device such as projectors 116, the supplemental content for display near the user device 102 during presentation of the media asset. The media guidance display may transmit the supplemental content to any display device in the area of the user device 102, such as another television screen, a tablet, or a set of augmented reality glasses. For example, the media guidance application may transmit the supplemental content displaying objects 112 and 114 which match objects 104 and 106, respectively, to be displayed on the wall via projectors 116. In some embodiments, the media guidance application transmits, to speakers 118, a set of sounds which is included in the supplemental content. For example, the media guidance application may also transmit sounds of waves to the speakers 118.

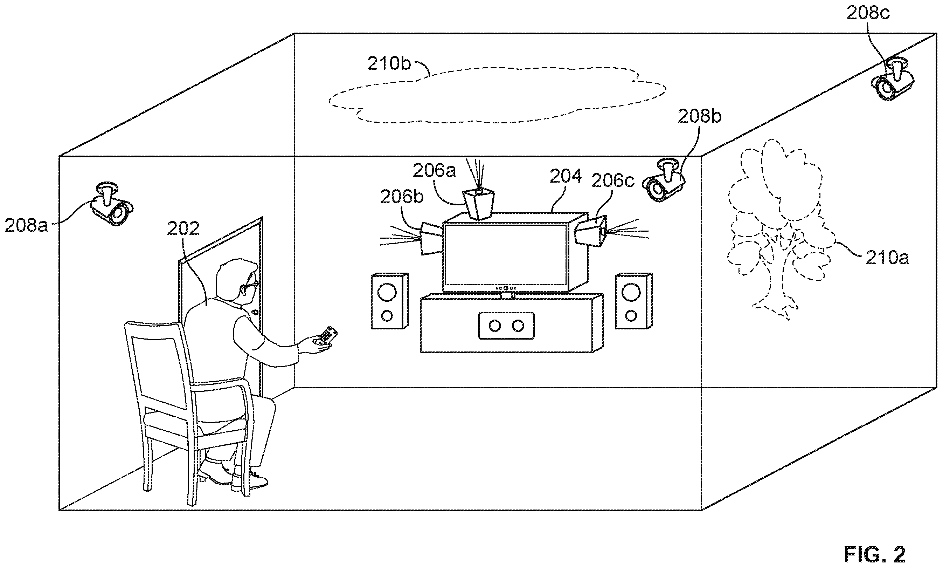

FIG. 2 shows an illustrative example of a display of supplemental content near a user device in available regions near a user device, in accordance with some embodiments of the disclosure. User device 204 may be a television, a tablet, a smart phone or any other user device which displays a media asset. Projectors 206a, 206b, and 206c project the supplemental content around the room. In some embodiments, supplemental content may be displayed on any display device in the area of the user device 204, such as another television screen, a tablet, or a set of augmented reality glasses.. Cameras 208a, 208b, and 208c monitor the room as well as user 202. Images 210a and 210b are portions of the supplemental content which have been projected onto the walls by 206c and 206a, respectively. The media guidance application may run locally on the user device 204, on a remote server connected to the user device 204, or any combination thereof.

The media guidance application monitors, using cameras 208a, 208b, and 208c, one or more regions near the user device 204. For example, the media guidance application may analyze the room around the user device 204 based on camera feedback from cameras 208a, 208b, and 208c, identify sections of the room with walls or other surfaces which may be available for supplemental content, and monitor those sections.

The media guidance application determines dimensions for each of the one or more regions near the user device 204 based on the monitoring. For example, the media guidance application may calculate the dimensions, size, and orientation of the walls and available surfaces around the room based on analysis of the room and monitoring. In some embodiments, the media guidance application analyzes the one or more regions near the user device 204 for one or more portions that are suitable to display the supplemental content such as images 210a and 210b. For example, the media guidance application may identify a wall which is clear of any obstruction such as a painting hanging on the wall or a bookcase in the middle, and analyze the wall based on whether the wall section is available for the display of supplemental content. In some embodiments, the media guidance application selects a portion that is suitable for displaying the supplemental content based on the analysis. For example, the media guidance application may select an area of the wall which is not obstructed and therefore available to display supplemental content. In some embodiments, the media guidance application determines dimensions indicating the size, the shape, and the orientation of the one or more regions for the selected portion. For example, the media guidance application may select a region on the ceiling to be available for display of supplemental content and determine the dimensions, including the size of the space, as well as the orientation facing downwards and the shape of a donut so that the center fan or ceiling light is not included in the selected region.

The media guidance application retrieves supplemental content associated with a scene of the media asset being presented on the user device 204. For example, the media guidance application may retrieve supplemental content associated with the scene of a movie playing on the user device 204 from the supplemental content database. In some embodiments, the media guidance application identifies at least one of an object and a location represented in the scene. In some embodiments, the media guidance application identifies plot information associated with the scene based on the identified at least one of the object and the location. In some embodiments, the media guidance application searches a database of supplemental content for a supplemental content matching the plot information associated with the scene.

The media guidance application identifies dimensions of the supplemental content such as images 210a and 210b. For example, the media guidance application may determine the intended dimensions of the supplemental content such as images 210a and 210b based on tags associated with the supplemental content. In some embodiments, the media guidance application identifies one of a size, a shape, and an orientation of the supplemental content such as images 210a and 210b. For example, some supplemental content may be oriented to be seen from below, such as an image of a cloud from below as seen in image 210b.

The media guidance application compares the dimensions of the supplemental content, such as images 210a and 210b, to the dimensions for each of the one or more regions. In some embodiments, the media guidance application compares the dimensions of the supplemental content to the dimensions for each of the one or more regions, further comprises comparing the one of the size, the shape, and the orientation of each of the one or more regions to the one of the size, the shape, and the orientation of the supplemental content. For example, the media guidance application may compare the shape of the region to the shape of the supplemental content or the orientation of the region to the orientation of the supplemental content.

The media guidance application filters a subset of the one or more regions based on the comparing. For example, the media guidance application may filter the regions to identify the region which is available to display the identified supplemental content. In some embodiments, the media guidance application identifies an object associated with one of the one or more regions. For example, the media guidance application may identify that there is a bookcase in the region. In some embodiments, the media guidance application compares the object to known objects to determine whether the object is available to display the supplemental content, such as images 210a and 210b. For example, the media guidance application may identify blinds covering a window, and after searching through the database of known objects, determine that the blinds covering a window are available to display supplemental content. In some embodiments, the media guidance application determines that the object is not available to display the supplemental content based on the comparing. For example, the media guidance application may search through a database of known objects to determine that the supplemental cannot be displayed on top of a bookcase. In some embodiments, the media guidance application removes the one of the one or more regions from the one or more regions. For example, the media guidance application may filter out the region with a bookcase from the regions available for display of supplemental content.

The media guidance application transmits, to projectors 206a, 206b, and 206c, the supplemental content for display in the subset of the one or more regions near the user device 204, such as images 210a and 210b. The media guidance display may transmit the supplemental content to any display device in the area of the user device 204, such as another television screen, a tablet, or a set of augmented reality glasses. In some embodiments, the media guidance application determines a plurality of portions of the supplemental content such as images 210a and 210b. For example, the supplemental content may be a separate images of different dimensions such as image 210a which shows a tree from the side and image 210b which shows a cloud from below. In some embodiments, the media guidance application matches each of the plurality of portions of the supplemental content to one of the subset of the one or more regions. For example, the media guidance application may match image 210a to a side wall and image 210b to a region on the ceiling. In some embodiments, the media guidance application generates for display each of the plurality of portions of the supplemental content on the corresponding one of the subset of the plurality of spaces. For example, the media guidance application may display each of the images on the corresponding regions around the room.

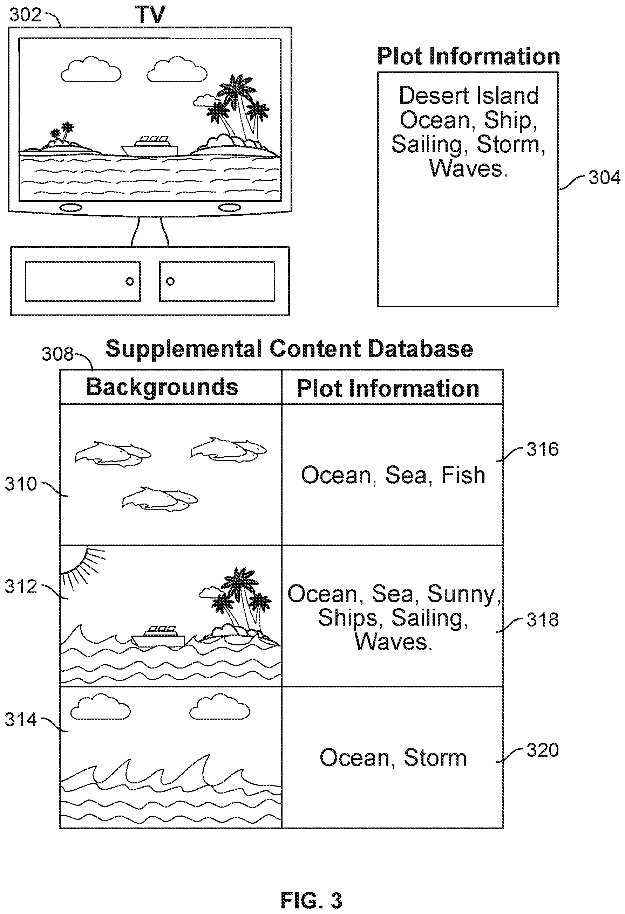

FIG. 3 shows an illustrative example of a supplemental content database showing supplemental content linked to plot information, in accordance with some embodiments of the disclosure. User device 302 shows a frame of a media asset including a cruise ship, palm trees, waves, and clouds. Once the media guidance application identifies these objects in the frame, the media guidance application searches the plot information database for keywords associated with these objects. Plot Information 304 includes the keywords "Desert Island", "Ocean", "Ship", "Sailing", "Storm", and "waves", based on the objects identified in the frame displayed on user device 302. The media guidance application than uses this plot information 304 to look up images which are associated with these keywords using Supplemental Content Database 308. The Supplemental Content Database 308 includes images 310, 312, and 314 with plot information 316, 318 and 320 associated with each image, respectively. Based on comparing plot information 304 with plot information 316, 318 and 320, the media guidance application picks which of the images 310, 312, and 314 is suitable supplemental content to compliment the frame displayed on user device 302.

The media guidance application monitors one or more frames during presentation of the media asset on the user device 302. The user device 302 may be a television, a tablet, a smart phone or any other user device 102 which displays a media asset. For example, the media guidance application may monitor the movie as it is displayed on the television. The media guidance application selects a frame during presentation of the media asset indicative of a new scene in the media asset. For example, the media guidance application may, through the monitoring of the movie, select a frame which starts a new scene of the movie. In another example, the movie or other media asset may have tags indicating each new scene and through monitoring the movie and the scene tags, the media guidance application may select a frame which has been tagged as starting a new scene.

The media guidance application identifies at least one of an object and a location represented in the selected frame. For example, the media guidance application may analyze the frame to determine objects in the frame. In some embodiments, the media guidance application identifies key features in the selected frame. The key features are pieces of information describing elements of the frame and may describe specific structural elements such as edges, corners, points, lines, ridges, or regions of the image present in the frame. For example, the media guidance application may analyze the frame using edge detection and determine the presence of a series of edges is present in the frame. The media guidance application may determine by analyzing the key features that objects represented on user device 302 include a cruise ship and a desert island in the middle of the ocean.

The media guidance application determines plot information 304 associated with the at least one of the object and the location. For example, the media guidance application may determine keywords associated with the plot based on the object identified in the scene. In some embodiments, the media guidance application searches a plot information database to identify plot information associated with the at least one of the object and the location, and the action occurring in the selected frame. The plot information 304 may include keywords describing a plot of the selected frame. For example, the media guidance application may consider common keywords associated with the object and the location, and the action occurring in the selected frame in order to determine the plot information 304 includes "desert island", "Ocean", "Ship", "sailing", "storm", and "waves".

The media guidance application identifies, from Supplemental Content Database 308, the supplemental content to accompany the media asset based on the plot information 304. For example, the media guidance application may identify supplemental content such as images 310, 312, and 314 based on comparing plot information 316, 318 and 320 to plot information 304. The supplemental content may be a specific background image to be displayed on the wall of the room near the television, such as images 310, 312, and 314, or a set of images with a common theme to be displayed around an area based on the regions determined to be available. The supplemental content may include visual images, sounds, video clips, or combinations thereof. The supplemental content may included in alternate feed of a live event. For example, if the plot information 304 indicates that the media asset is a sporting event, being displayed live, the supplemental content to be displayed may include live fan reactions to the sporting event as it occurs.

The media guidance application transmits, to a projection device, the supplemental content for display near the user device 302 during presentation of the media asset. For example, the media guidance application may transmit the supplemental content, such as images 310, 312, and 314. In some embodiments, the media guidance application transmits, to speakers, a set of sounds which is included in the supplemental content. For example, the media guidance application may also transmit sounds of waves to the speakers.

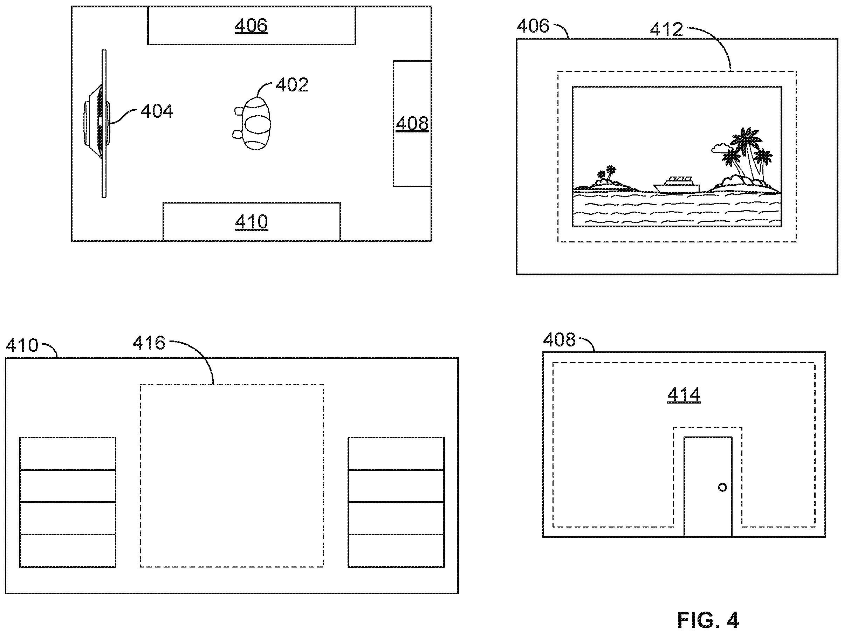

FIG. 4 shows an illustrative example of regions available for the display of supplemental content near a user device, in accordance with some embodiments of the disclosure. While user 402 is watching user device 404, the media guidance application is monitoring regions 406, 408 and 410. Each of the regions may be determined based on the space available. Some regions, such as region 406 may have item 412 in the middle of the region. Once supplemental content is identified based on the frame displayed on user device 404, the media guidance application may determine whether item 412 is available to display the supplemental content. Depending on the supplemental content identified, the media guidance application may determine that item 412 is available to display the image and display the supplemental content on region 406 so that it covers item 412. Other regions, such as region 408 may have structural items which limit the size or shape of the space. Region 414 is a region within region 408 which excludes the door which the media guidance application has determined is not available to display supplemental content. In this example, the media guidance application may filter out region 408, which includes the door, and instead include region 414 in the list of possible regions to display the supplemental content as long as the non-traditional shape works with the supplemental content identified for the frame displayed on user device 404. In other regions, such as region 410, the media guidance application may identify region 416 as available to display supplemental content and include region 416 instead of region 410 as one of the regions available for possible display of supplemental content.

The media guidance application monitors, using cameras, one or more regions, such as regions 406, 408 and 410, near the user device 404. For example, the media guidance application may analyze the room around the user device 404 based on camera feedback from cameras, identify sections of the room with walls or other surfaces which may be available for supplemental content, such as regions 406, 408, and 410, and monitor those sections.

The media guidance application determines dimensions for each of the one or more regions near the user device 404, such as regions 406, 408, and 410, based on the monitoring. For example, the media guidance application may calculate the dimensions, size, and orientation of the walls and available surfaces around the room based on analysis of the room and monitoring. In some embodiments, the media guidance application analyzes the one or more regions near the user device 404, such as regions 406, 408, and 410, for one or more portions that are suitable to display the supplemental content. For example, the media guidance application may identify a wall which is clear of any obstruction such as region 414, and analyze the wall based on whether the wall section is available for the display of supplemental content. In some embodiments, the media guidance application selects a portion that is suitable for displaying the supplemental content based on the analysis. For example, the media guidance application may select an area of the wall which is not obstructed and therefore available to display supplemental content. In some embodiments, the media guidance application determines dimensions indicating the size, the shape, and the orientation of the one or more regions for the selected portion. For example, the media guidance application may select a region on the ceiling to be available for display of supplemental content and determine the dimensions, including the size of the space, as well as the orientation facing downwards and the shape of a donut so that the center fan or ceiling light is not included in the selected region.

The media guidance application retrieves supplemental content associated with a scene of the media asset being presented on the user device 404. For example, the media guidance application may retrieve supplemental content associated with the scene of a movie playing on the user device 404 from the supplemental content database. In some embodiments, the media guidance application identifies at least one of an object and a location represented in the scene. In some embodiments, the media guidance application identifies plot information associated with the scene based on the identified at least one of the object and the location. In some embodiments, the media guidance application searches a database of supplemental content for a supplemental content matching the plot information associated with the scene.

The media guidance application identifies dimensions of the supplemental content. For example, the media guidance application may determine the intended dimensions of the supplemental content based on tags associated with the supplemental content. In some embodiments, the media guidance application identifies one of a size, a shape, and an orientation of the supplemental content. For example, some supplemental content may be oriented to be seen from below, such as an image of a cloud from below.

The media guidance application compares the dimensions of the supplemental content to the dimensions for each of the one or more regions, such as regions 406, 408, and 410. In some embodiments, the media guidance application compares the dimensions of the supplemental content to the dimensions for each of the one or more regions, further comprises comparing the one of the size, the shape, and the orientation of each of the one or more regions to the one of the size, the shape, and the orientation of the supplemental content. For example, the media guidance application may compare the shape of the region to the shape of the supplemental content or the orientation of the region to the orientation of the supplemental content.

The media guidance application filters a subset of the one or more regions based on the comparing. For example, the media guidance application may filter the regions to identify the region which is available to display the identified supplemental content. In some embodiments, the media guidance application identifies an object associated with one of the one or more regions. For example, the media guidance application may identify that there is a bookcase in region 410. In some embodiments, the media guidance application compares the object identified by the cameras to known objects to determine whether the object is available for the display of supplemental content. For example, the media guidance application may identify blinds covering a window, and, after searching through the database of known objects, determine that the blinds covering a window are available to display supplemental content. In some embodiments, the media guidance application determines that the object is not available to display the supplemental content based on the comparing. For example, the media guidance application may search through a database of known objects to determine that the supplemental cannot be displayed on top of a bookcase. In some embodiments, the media guidance application removes the one of the one or more regions from the one or more regions. For example, the media guidance application may filter out the region with a bookcase from the regions available for display of supplemental content. In this example, the media guidance application may filter out region 408, which includes the door, and instead include region 414 in the list of possible regions to display the supplemental content as long as the non-traditional shape works with the supplemental content identified for the frame displayed on user device 404. In other regions, such as region 410, the media guidance application may identify region 416 as available to display supplemental content and include region 416 instead of region 410 as one of the regions available for possible display of supplemental content.

The media guidance application transmits, to projectors, the supplemental content for display in the subset of the one or more regions near the user device 404, such as regions 406, 414, and 416. The media guidance display may transmit the supplemental content to any display device in the area of the user device 404, such as another television screen, a tablet, or a set of augmented reality glasses. In some embodiments, the media guidance application determines a plurality of portions of the supplemental content. For example, the supplemental content may be separate images of different dimensions such as an image which shows a tree from the side and an image which shows a cloud from below. In some embodiments, the media guidance application matches each of the plurality of portions of the supplemental content to one of the subset of the one or more regions. For example, the media guidance application may match one image to region 416 and another image to region 414. In some embodiments, the media guidance application generates for display each of the plurality of portions of the supplemental content on the corresponding one of the subset of the plurality of spaces. For example, the media guidance application may display each of the images on the corresponding regions around the room.

The amount of content available to users in any given content delivery system can be substantial. Consequently, many users desire a form of media guidance through an interface that allows users to efficiently navigate content selections and easily identify content that they may desire. An application that provides such guidance is referred to herein as an interactive media guidance application or, sometimes, a media guidance application or a guidance application.

Interactive media guidance applications may take various forms depending on the content for which they provide guidance. One typical type of media guidance application is an interactive television program guide. Interactive television program guides (sometimes referred to as electronic program guides) are well-known guidance applications that, among other things, allow users to navigate among and locate many types of content or media assets. Interactive media guidance applications may generate graphical user interface screens that enable a user to navigate among, locate and select content. As referred to herein, the terms "media asset" and "content" should be understood to mean an electronically consumable user asset, such as television programming, as well as pay-per-view programs, on-demand programs (as in video-on-demand (VOD) systems), Internet content (e.g., streaming content, downloadable content, Webcasts, etc.), video clips, audio, content information, pictures, rotating images, documents, playlists, websites, articles, books, electronic books, blogs, chat sessions, social media, applications, games, and/or any other media or multimedia and/or combination of the same. Guidance applications also allow users to navigate among and locate content. As referred to herein, the term "multimedia" should be understood to mean content that utilizes at least two different content forms described above, for example, text, audio, images, video, or interactivity content forms. Content may be recorded, played, displayed or accessed by user equipment devices, but can also be part of a live performance.

The media guidance application and/or any instructions for performing any of the embodiments discussed herein may be encoded on computer readable media. Computer readable media includes any media capable of storing data. The computer readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory ("RAM"), etc.

With the advent of the Internet, mobile computing, and high-speed wireless networks, users are accessing media on user equipment devices on which they traditionally did not. As referred to herein, the phrase "user equipment device," "user equipment," "user device," "electronic device," "electronic equipment," "media equipment device," or "media device" should be understood to mean any device for accessing the content described above, such as a television, a Smart TV, a set-top box, an integrated receiver decoder (IRD) for handling satellite television, a digital storage device, a digital media receiver (DMR), a digital media adapter (DMA), a streaming media device, a DVD player, a DVD recorder, a connected DVD, a local media server, a BLU-RAY player, a BLU-RAY recorder, a personal computer (PC), a laptop computer, a tablet computer, a WebTV box, a personal computer television (PC/TV), a PC media server, a PC media center, a hand-held computer, a stationary telephone, a personal digital assistant (PDA), a mobile telephone, a portable video player, a portable music player, a portable gaming machine, a smart phone, or any other television equipment, computing equipment, or wireless device, and/or combination of the same. In some embodiments, the user equipment device may have a front facing screen and a rear facing screen, multiple front screens, or multiple angled screens. In some embodiments, the user equipment device may have a front facing camera and/or a rear facing camera. On these user equipment devices, users may be able to navigate among and locate the same content available through a television. Consequently, media guidance may be available on these devices, as well. The guidance provided may be for content available only through a television, for content available only through one or more of other types of user equipment devices, or for content available both through a television and one or more of the other types of user equipment devices. The media guidance applications may be provided as on-line applications (i.e., provided on a web-site), or as stand-alone applications or clients on user equipment devices. Various devices and platforms that may implement media guidance applications are described in more detail below.

One of the functions of the media guidance application is to provide media guidance data to users. As referred to herein, the phrase "media guidance data" or "guidance data" should be understood to mean any data related to content or data used in operating the guidance application. For example, the guidance data may include program information, guidance application settings, user preferences, user profile information, media listings, media-related information (e.g., broadcast times, broadcast channels, titles, descriptions, ratings information (e.g., parental control ratings, critic's ratings, etc.), genre or category information, actor information, logo data for broadcasters' or providers' logos, etc.), media format (e.g., standard definition, high definition, 3D, etc.), on-demand information, blogs, websites, and any other type of guidance data that is helpful for a user to navigate among and locate desired content selections.

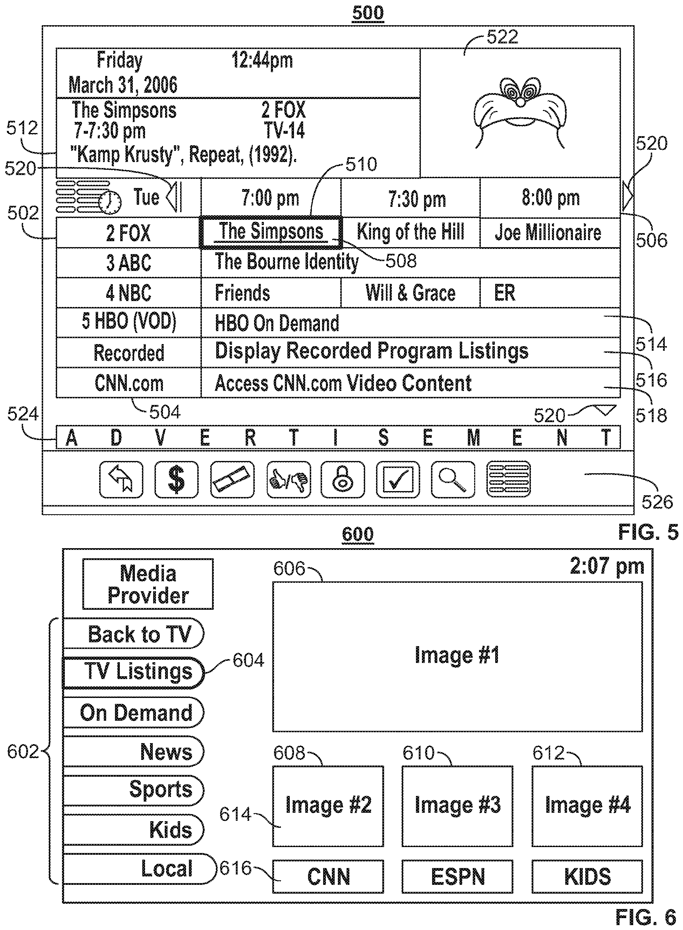

FIGS. 5-6 show illustrative display screens that may be used to provide media guidance data. The display screens shown in FIGS. 5-6 may be implemented on any suitable user equipment device or platform. While the displays of FIGS. 5-6 are illustrated as full screen displays, they may also be fully or partially overlaid over content being displayed. A user may indicate a desire to access content information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media guidance data organized in one of several ways, such as by time and channel in a grid, by time, by channel, by source, by content type, by category (e.g., movies, sports, news, children, or other categories of programming), or other predefined, user-defined, or other organization criteria.

FIG. 5 shows illustrative grid of a program listings display 500 arranged by time and channel that also enables access to different types of content in a single display. Display 500 may include grid 502 with: (1) a column of channel/content type identifiers 504, where each channel/content type identifier (which is a cell in the column) identifies a different channel or content type available; and (2) a row of time identifiers 506, where each time identifier (which is a cell in the row) identifies a time block of programming. Grid 502 also includes cells of program listings, such as program listing 508, where each listing provides the title of the program provided on the listing's associated channel and time. With a user input device, a user can select program listings by moving highlight region 510. Information relating to the program listing selected by highlight region 510 may be provided in program information region 512. Region 512 may include, for example, the program title, the program description, the time the program is provided (if applicable), the channel the program is on (if applicable), the program's rating, and other desired information.

In addition to providing access to linear programming (e.g., content that is scheduled to be transmitted to a plurality of user equipment devices at a predetermined time and is provided according to a schedule), the media guidance application also provides access to non-linear programming (e.g., content accessible to a user equipment device at any time and is not provided according to a schedule). Non-linear programming may include content from different content sources including on-demand content (e.g., VOD), Internet content (e.g., streaming media, downloadable media, etc.), locally stored content (e.g., content stored on any user equipment device described above or other storage device), or other time-independent content. On-demand content may include movies or any other content provided by a particular content provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming content or downloadable content through an Internet web site or other Internet access (e.g. FTP).

Grid 502 may provide media guidance data for non-linear programming including on-demand listing 514, recorded content listing 516, and Internet content listing 518. A display combining media guidance data for content from different types of content sources is sometimes referred to as a "mixed-media" display. Various permutations of the types of media guidance data that may be displayed that are different than display 500 may be based on user selection or guidance application definition (e.g., a display of only recorded and broadcast listings, only on-demand and broadcast listings, etc.). As illustrated, listings 514, 516, and 518 are shown as spanning the entire time block displayed in grid 502 to indicate that selection of these listings may provide access to a display dedicated to on-demand listings, recorded listings, or Internet listings, respectively. In some embodiments, listings for these content types may be included directly in grid 502. Additional media guidance data may be displayed in response to the user selecting one of the navigational icons 520. (Pressing an arrow key on a user input device may affect the display in a similar manner as selecting navigational icons 520.)

Display 500 may also include video region 522, and options region 526. Video region 522 may allow the user to view and/or preview programs that are currently available, will be available, or were available to the user. The content of video region 522 may correspond to, or be independent from, one of the listings displayed in grid 502. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001, which are hereby incorporated by reference herein in their entireties. PIG displays may be included in other media guidance application display screens of the embodiments described herein.

Options region 526 may allow the user to access different types of content, media guidance application displays, and/or media guidance application features. Options region 526 may be part of display 500 (and other display screens described herein), or may be invoked by a user by selecting an on-screen option or pressing a dedicated or assignable button on a user input device. The selectable options within options region 526 may concern features related to program listings in grid 502 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, Internet options, cloud-based options, device synchronization options, second screen device options, options to access various types of media guidance data displays, options to subscribe to a premium service, options to edit a user's profile, options to access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of content listings displayed (e.g., only HDTV or only 3D programming, user-specified broadcast channels based on favorite channel selections, re-ordering the display of channels, recommended content, etc.), desired recording features (e.g., recording or series recordings for particular users, recording quality, etc.), parental control settings, customized presentation of Internet content (e.g., presentation of social media content, e-mail, electronically delivered articles, etc.) and other desired customizations.

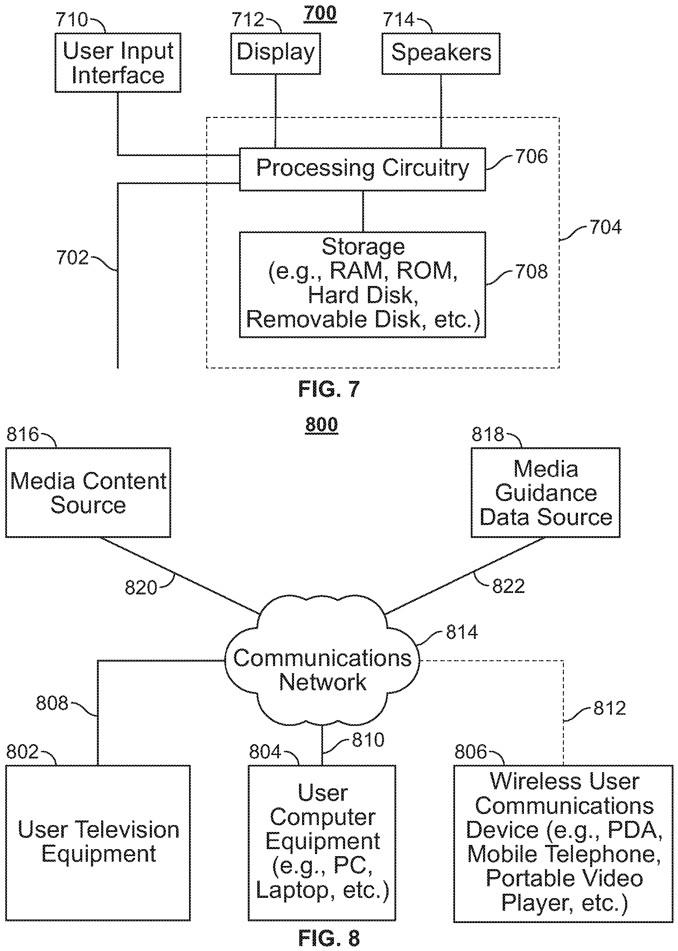

The media guidance application may allow a user to provide user profile information or may automatically compile user profile information. The media guidance application may, for example, monitor the content the user accesses and/or other interactions the user may have with the guidance application. Additionally, the media guidance application may obtain all or part of other user profiles that are related to a particular user (e.g., from other web sites on the Internet the user accesses, such as www.allrovi.com, from other media guidance applications the user accesses, from other interactive applications the user accesses, from another user equipment device of the user, etc.), and/or obtain information about the user from other sources that the media guidance application may access. As a result, a user can be provided with a unified guidance application experience across the user's different user equipment devices. This type of user experience is described in greater detail below in connection with FIG. 8. Additional personalized media guidance application features are described in greater detail in Ellis et al., U.S. Patent Application Publication No. 2005/0251827, filed July 11, 2005, Boyer et al., U.S. Patent No. 7,165,098, issued January 16, 2007, and Ellis et al., U.S. Patent Application Publication No. 2002/0174430, filed February 21, 2002, which are hereby incorporated by reference herein in their entireties.

Another display arrangement for providing media guidance is shown in FIG. 6. Video mosaic display 600 includes selectable options 602 for content information organized based on content type, genre, and/or other organization criteria. In display 600, television listings option 604 is selected, thus providing listings 606, 608, 610, and 612 as broadcast program listings. In display 600 the listings may provide graphical images including cover art, still images from the content, video clip previews, live video from the content, or other types of content that indicate to a user the content being described by the media guidance data in the listing. Each of the graphical listings may also be accompanied by text to provide further information about the content associated with the listing. For example, listing 608 may include more than one portion, including media portion 614 and text portion 616. Media portion 614 and/or text portion 616 may be selectable to view content in full-screen or to view information related to the content displayed in media portion 614 (e.g., to view listings for the channel that the video is displayed on).

The listings in display 600 are of different sizes (i.e., listing 606 is larger than listings 608, 610, and 612), but if desired, all the listings may be the same size. Listings may be of different sizes or graphically accentuated to indicate degrees of interest to the user or to emphasize certain content, as desired by the content provider or based on user preferences. Various systems and methods for graphically accentuating content listings are discussed in, for example, Yates, U.S. Patent Application Publication No. 2010/0153885, filed November 12, 2009, which is hereby incorporated by reference herein in its entirety.

Users may access content and the media guidance application (and its display screens described above and below) from one or more of their user equipment devices. FIG. 7 shows a generalized embodiment of illustrative user equipment device 700. More specific implementations of user equipment devices are discussed below in connection with FIG. 8. User equipment device 700 may receive content and data via input/output (hereinafter "I/O") path 702. I/O path 702 may provide content (e.g., broadcast programming, on-demand programming, Internet content, content available over a local area network (LAN) or wide area network (WAN), and/or other content) and data to control circuitry 704, which includes processing circuitry 706 and storage 708. Control circuitry 704 may be used to send and receive commands, requests, and other suitable data using I/O path 702. I/O path 702 may connect control circuitry 704 (and specifically processing circuitry 706) to one or more communications paths (described below). I/O functions may be provided by one or more of these communications paths, but are shown as a single path in FIG. 7 to avoid overcomplicating the drawing.

Control circuitry 704 may be based on any suitable processing circuitry such as processing circuitry 706. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, or any suitable number of cores) or supercomputer. In some embodiments, processing circuitry may be distributed across multiple separate processors or processing units, for example, multiple of the same type of processing units (e.g., two Intel Core i7 processors) or multiple different processors (e.g., an Intel Core i5 processor and an Intel Core i7 processor). In some embodiments, control circuitry 704 executes instructions for a media guidance application stored in memory (i.e., storage 708). Specifically, control circuitry 704 may be instructed by the media guidance application to perform the functions discussed above and below. For example, the media guidance application may provide instructions to control circuitry 704 to generate the media guidance displays. In some implementations, any action performed by control circuitry 704 may be based on instructions received from the media guidance application.

In client-server based embodiments, control circuitry 704 may include communications circuitry suitable for communicating with a guidance application server or other networks or servers. The instructions for carrying out the above mentioned functionality may be stored on the guidance application server. Communications circuitry may include a cable modem, an integrated services digital network (ISDN) modem, a digital subscriber line (DSL) modem, a telephone modem, Ethernet card, or a wireless modem for communications with other equipment, or any other suitable communications circuitry. Such communications may involve the Internet or any other suitable communications networks or paths (which is described in more detail in connection with FIG. 8). In addition, communications circuitry may include circuitry that enables peer-to-peer communication of user equipment devices, or communication of user equipment devices in locations remote from each other (described in more detail below).

Memory may be an electronic storage device provided as storage 708 that is part of control circuitry 704. As referred to herein, the phrase "electronic storage device" or "storage device" should be understood to mean any device for storing electronic data, computer software, or firmware, such as random-access memory, read-only memory, hard drives, optical drives, digital video disc (DVD) recorders, compact disc (CD) recorders, BLU-RAY disc (BD) recorders, BLU-RAY 3D disc recorders, digital video recorders (DVR, sometimes called a personal video recorder, or PVR), solid state devices, quantum storage devices, gaming consoles, gaming media, or any other suitable fixed or removable storage devices, and/or any combination of the same. Storage 708 may be used to store various types of content described herein as well as media guidance data described above. Nonvolatile memory may also be used (e.g., to launch a boot-up routine and other instructions). Cloud-based storage, described in relation to FIG. 8, may be used to supplement storage 708 or instead of storage 708.

Control circuitry 704 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 704 may also include scaler circuitry for upconverting and downconverting content into the preferred output format of the user equipment 700. Circuitry 704 may also include digital-to-analog converter circuitry and analog-to-digital converter circuitry for converting between digital and analog signals. The tuning and encoding circuitry may be used by the user equipment device to receive and to display, to play, or to record content. The tuning and encoding circuitry may also be used to receive guidance data. The circuitry described herein, including for example, the tuning, video generating, encoding, decoding, encrypting, decrypting, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 708 is provided as a separate device from user equipment 700, the tuning and encoding circuitry (including multiple tuners) may be associated with storage 708.

A user may send instructions to control circuitry 704 using user input interface 710. User input interface 710 may be any suitable user interface, such as a remote control, mouse, trackball, keypad, keyboard, touch screen, touchpad, stylus input, joystick, voice recognition interface, or other user input interfaces. Display 712 may be provided as a stand-alone device or integrated with other elements of user equipment device 700. For example, display 712 may be a touchscreen or touch-sensitive display. In such circumstances, user input interface 710 may be integrated with or combined with display 712. Display 712 may be one or more of a monitor, a television, a liquid crystal display (LCD) for a mobile device, amorphous silicon display, low temperature poly silicon display, electronic ink display, electrophoretic display, active matrix display, electro-wetting display, electrofluidic display, cathode ray tube display, light-emitting diode display, electroluminescent display, plasma display panel, high-performance addressing display, thin-film transistor display, organic light-emitting diode display, surface-conduction electron-emitter display (SED), laser television, carbon nanotubes, quantum dot display, interferometric modulator display, or any other suitable equipment for displaying visual images. In some embodiments, display 712 may be HDTV-capable. In some embodiments, display 712 may be a 3D display, and the interactive media guidance application and any suitable content may be displayed in 3D. A video card or graphics card may generate the output to the display 712. The video card may offer various functions such as accelerated rendering of 3D scenes and 2D graphics, MPEG-2/MPEG-4 decoding, TV output, or the ability to connect multiple monitors. The video card may be any processing circuitry described above in relation to control circuitry 704. The video card may be integrated with the control circuitry 704. Speakers 714 may be provided as integrated with other elements of user equipment device 700 or may be stand-alone units. The audio component of videos and other content displayed on display 712 may be played through speakers 714. In some embodiments, the audio may be distributed to a receiver (not shown), which processes and outputs the audio via speakers 714.

The guidance application may be implemented using any suitable architecture. For example, it may be a stand-alone application wholly-implemented on user equipment device 700. In such an approach, instructions of the application are stored locally (e.g., in storage 708), and data for use by the application is downloaded on a periodic basis (e.g., from an out-of-band feed, from an Internet resource, or using another suitable approach). Control circuitry 704 may retrieve instructions of the application from storage 708 and process the instructions to generate any of the displays discussed herein. Based on the processed instructions, control circuitry 704 may determine what action to perform when input is received from input interface 710. For example, movement of a cursor on a display up/down may be indicated by the processed instructions when input interface 710 indicates that an up/down button was selected.

In some embodiments, the media guidance application is a client-server based application. Data for use by a thick or thin client implemented on user equipment device 700 is retrieved on-demand by issuing requests to a server remote to the user equipment device 700. In one example of a client-server based guidance application, control circuitry 704 runs a web browser that interprets web pages provided by a remote server. For example, the remote server may store the instructions for the application in a storage device. The remote server may process the stored instructions using circuitry (e.g., control circuitry 704) and generate the displays discussed above and below. The client device may receive the displays generated by the remote server and may display the content of the displays locally on equipment device 700. This way, the processing of the instructions is performed remotely by the server while the resulting displays are provided locally on equipment device 700. Equipment device 700 may receive inputs from the user via input interface 710 and transmit those inputs to the remote server for processing and generating the corresponding displays. For example, equipment device 700 may transmit a communication to the remote server indicating that an up/down button was selected via input interface 710. The remote server may process instructions in accordance with that input and generate a display of the application corresponding to the input (e.g., a display that moves a cursor up/down). The generated display is then transmitted to equipment device 700 for presentation to the user.

In some embodiments, the media guidance application is downloaded and interpreted or otherwise run by an interpreter or virtual machine (run by control circuitry 704). In some embodiments, the guidance application may be encoded in the ETV Binary Interchange Format (EBIF), received by control circuitry 704 as part of a suitable feed, and interpreted by a user agent running on control circuitry 704. For example, the guidance application may be an EBIF application. In some embodiments, the guidance application may be defined by a series of JAVA-based files that are received and run by a local virtual machine or other suitable middleware executed by control circuitry 704. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 700 of FIG. 7 can be implemented in system 800 of FIG. 8 as user television equipment 802, user computer equipment 804, wireless user communications device 806, or any other type of user equipment suitable for accessing content, such as a non-portable gaming machine. For simplicity, these devices may be referred to herein collectively as user equipment or user equipment devices, and may be substantially similar to user equipment devices described above. User equipment devices, on which a media guidance application may be implemented, may function as a standalone device or may be part of a network of devices. Various network configurations of devices may be implemented and are discussed in more detail below.

A user equipment device utilizing at least some of the system features described above in connection with FIG. 7 may not be classified solely as user television equipment 802, user computer equipment 804, or a wireless user communications device 806. For example, user television equipment 802 may, like some user computer equipment 804, be Internet-enabled allowing for access to Internet content, while user computer equipment 804 may, like some television equipment 802, include a tuner allowing for access to television programming. The media guidance application may have the same layout on various different types of user equipment or may be tailored to the display capabilities of the user equipment. For example, on user computer equipment 804, the guidance application may be provided as a web site accessed by a web browser. In another example, the guidance application may be scaled down for wireless user communications devices 806.

In system 800, there is typically more than one of each type of user equipment device but only one of each is shown in FIG. 8 to avoid overcomplicating the drawing. In addition, each user may utilize more than one type of user equipment device and also more than one of each type of user equipment device.

In some embodiments, a user equipment device (e.g., user television equipment 802, user computer equipment 804, wireless user communications device 806) may be referred to as a "second screen device." For example, a second screen device may supplement content presented on a first user equipment device. The content presented on the second screen device may be any suitable content that supplements the content presented on the first device. In some embodiments, the second screen device provides an interface for adjusting settings and display preferences of the first device. In some embodiments, the second screen device is configured for interacting with other second screen devices or for interacting with a social network. The second screen device can be located in the same room as the first device, a different room from the first device but in the same house or building, or in a different building from the first device.

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.allrovi.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 814. Namely, user television equipment 802, user computer equipment 804, and wireless user communications device 806 are coupled to communications network 814 via communications paths 808, 810, and 812, respectively. Communications network 814 may be one or more networks including the Internet, a mobile phone network, mobile voice or data network (e.g., a 4G or LTE network), cable network, public switched telephone network, or other types of communications network or combinations of communications networks. Paths 808, 810, and 812 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. Path 812 is drawn with dotted lines to indicate that in the exemplary embodiment shown in FIG. 8 it is a wireless path and paths 808 and 810 are drawn as solid lines to indicate they are wired paths (although these paths may be wireless paths, if desired). Communications with the user equipment devices may be provided by one or more of these communications paths, but are shown as a single path in FIG. 8 to avoid overcomplicating the drawing.

Although communications paths are not drawn between user equipment devices, these devices may communicate directly with each other via communication paths, such as those described above in connection with paths 808, 810, and 812, as well as other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 814.

System 800 includes content source 816 and media guidance data source 818 coupled to communications network 814 via communication paths 820 and 822, respectively. Paths 820 and 822 may include any of the communication paths described above in connection with paths 808, 810, and 812. Communications with the content source 816 and media guidance data source 818 may be exchanged over one or more communications paths, but are shown as a single path in FIG. 8 to avoid overcomplicating the drawing. In addition, there may be more than one of each of content source 816 and media guidance data source 818, but only one of each is shown in FIG. 8 to avoid overcomplicating the drawing. (The different types of each of these sources are discussed below.) If desired, content source 816 and media guidance data source 818 may be integrated as one source device. Although communications between sources 816 and 818 with user equipment devices 802, 804, and 806 are shown as through communications network 814, in some embodiments, sources 816 and 818 may communicate directly with user equipment devices 802, 804, and 806 via communication paths (not shown) such as those described above in connection with paths 808, 810, and 812.

Content source 816 may include one or more types of content distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other content providers. NBC is a trademark owned by the National Broadcasting Company, Inc., ABC is a trademark owned by the American Broadcasting Company, Inc., and HBO is a trademark owned by the Home Box Office, Inc. Content source 816 may be the originator of content (e.g., a television broadcaster, a Webcast provider, etc.) or may not be the originator of content (e.g., an on-demand content provider, an Internet provider of content of broadcast programs for downloading, etc.). Content source 816 may include cable sources, satellite providers, on-demand providers, Internet providers, over-the-top content providers, or other providers of content. Content source 816 may also include a remote media server used to store different types of content (including video content selected by a user), in a location remote from any of the user equipment devices. Systems and methods for remote storage of content, and providing remotely stored content to user equipment are discussed in greater detail in connection with Ellis et al., U.S. Patent No. 7,761,892, issued July 20, 2010, which is hereby incorporated by reference herein in its entirety.

Media guidance data source 818 may provide media guidance data, such as the media guidance data described above. Media guidance data may be provided to the user equipment devices using any suitable approach. In some embodiments, the guidance application may be a stand-alone interactive television program guide that receives program guide data via a data feed (e.g., a continuous feed or trickle feed). Program schedule data and other guidance data may be provided to the user equipment on a television channel sideband, using an in-band digital signal, using an out-of-band digital signal, or by any other suitable data transmission technique. Program schedule data and other media guidance data may be provided to user equipment on multiple analog or digital television channels.

In some embodiments, guidance data from media guidance data source 818 may be provided to users' equipment using a client-server approach. For example, a user equipment device may pull media guidance data from a server, or a server may push media guidance data to a user equipment device. In some embodiments, a guidance application client residing on the user's equipment may initiate sessions with source 818 to obtain guidance data when needed, e.g., when the guidance data is out of date or when the user equipment device receives a request from the user to receive data. Media guidance may be provided to the user equipment with any suitable frequency (e.g., continuously, daily, a user-specified period of time, a system-specified period of time, in response to a request from user equipment, etc.). Media guidance data source 818 may provide user equipment devices 802, 804, and 806 the media guidance application itself or software updates for the media guidance application.

In some embodiments, the media guidance data may include viewer data. For example, the viewer data may include current and/or historical user activity information (e.g., what content the user typically watches, what times of day the user watches content, whether the user interacts with a social network, at what times the user interacts with a social network to post information, what types of content the user typically watches (e.g., pay TV or free TV), mood, brain activity information, etc.). The media guidance data may also include subscription data. For example, the subscription data may identify to which sources or services a given user subscribes and/or to which sources or services the given user has previously subscribed but later terminated access (e.g., whether the user subscribes to premium channels, whether the user has added a premium level of services, whether the user has increased Internet speed). In some embodiments, the viewer data and/or the subscription data may identify patterns of a given user for a period of more than one year. The media guidance data may include a model (e.g., a survivor model) used for generating a score that indicates a likelihood a given user will terminate access to a serviceísource. For example, the media guidance application may process the viewer data with the subscription data using the model to generate a value or score that indicates a likelihood of whether the given user will terminate access to a particular service or source. In particular, a higher score may indicate a higher level of confidence that the user will terminate access to a particular service or source. Based on the score, the media guidance application may generate promotions that entice the user to keep the particular service or source indicated by the score a.s one to which the user will likely terminate access.

Media guidance applications may be, for example, stand-alone applications implemented on user equipment devices. For example, the media guidance application may be implemented as software or a set of executable instructions which may be stored in storage 708, and executed by control circuitry 704 of a user equipment device 700. In some embodiments, media guidance applications may be client-server applications where only a client application resides on the user equipment device, and server application resides on a remote server. For example, media guidance applications may be implemented partially as a client application on control circuitry 704 of user equipment device 700 and partially on a remote server as a server application (e.g., media guidance data source 818) running on control circuitry of the remote server. When executed by control circuitry of the remote server (such as media guidance data source 818), the media guidance application may instruct the control circuitry to generate the guidance application displays and transmit the generated displays to the user equipment devices. The server application may instruct the control circuitry of the media guidance data source 818 to transmit data for storage on the user equipment. The client application may instruct control circuitry of the receiving user equipment to generate the guidance application displays.

Content and/or media guidance data delivered to user equipment devices 802, 804, and 806 may be over-the-top (OTT) content. OTT content delivery allows Internet-enabled user devices, including any user equipment device described above, to receive content that is transferred over the Internet, including any content described above, in addition to content received over cable or satellite connections. OTT content is delivered via an Internet connection provided by an Internet service provider (ISP), but a third party distributes the content. The ISP may not be responsible for the viewing abilities, copyrights, or redistribution of the content, and may only transfer IP packets provided by the OTT content provider. Examples of OTT content providers include YOUTUBE, NETFLIX, and HULU, which provide audio and video via IP packets. Youtube is a trademark owned by Google Inc., Netflix is a trademark owned by Netflix Inc., and Hulu is a trademark owned by Hulu, LLC. OTT content providers may additionally or alternatively provide media guidance data described above. In addition to content and/or media guidance data, providers of OTT content can distribute media guidance applications (e.g., web-based applications or cloud-based applications), or the content can be displayed by media guidance applications stored on the user equipment device.

Media guidance system 800 is intended to illustrate a number of approaches, or network configurations, by which user equipment devices and sources of content and guidance data may communicate with each other for the purpose of accessing content and providing media guidance. The embodiments described herein may be applied in any one or a subset of these approaches, or in a system employing other approaches for delivering content and providing media guidance. The following four approaches provide specific illustrations of the generalized example of FIG. 8.

In one approach, user equipment devices may communicate with each other within a home network. User equipment devices can communicate with each other directly via short-range point-to-point communication schemes described above, via indirect paths through a hub or other similar device provided on a home network, or via communications network 814. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Publication No. 2005/0251827, filed July 11, 2005. Different types of user equipment devices in a home network may also communicate with each other to transmit content. For example, a user may transmit content from user computer equipment to a portable video player or portable music player.

In a second approach, users may have multiple types of user equipment by which they access content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent No. 8,046,801, issued October 25, 2011, which is hereby incorporated by reference herein in its entirety.

In a third approach, users of user equipment devices inside and outside a home can use their media guidance application to communicate directly with content source 816 to access content. Specifically, within a home, users of user television equipment 802 and user computer equipment 804 may access the media guidance application to navigate among and locate desirable content. Users may also access the media guidance application outside of the home using wireless user communications devices 806 to navigate among and locate desirable content.

In a fourth approach, user equipment devices may operate in a cloud computing environment to access cloud services. In a cloud computing environment, various types of computing services for content sharing, storage or distribution (e.g., video sharing sites or social networking sites) are provided by a collection of network-accessible computing and storage resources, referred to as "the cloud." For example, the cloud can include a collection of server computing devices, which may be located centrally or at distributed locations that provide cloud-based services to various types of users and devices connected via a network such as the Internet via communications network 814. These cloud resources may include one or more content sources 816 and one or more media guidance data sources 818. In addition or in the alternative, the remote computing sites may include other user equipment devices, such as user television equipment 802, user computer equipment 804, and wireless user communications device 806. For example, the other user equipment devices may provide access to a stored copy of a video or a streamed video. In such embodiments, user equipment devices may operate in a peer-to-peer manner without communicating with a central server.

The cloud provides access to services, such as content storage, content sharing, or social networking services, among other examples, as well as access to any content described above, for user equipment devices. Services can be provided in the cloud through cloud computing service providers, or through other providers of online services. For example, the cloud-based services can include a content storage service, a content sharing site, a social networking site, or other services via which user-sourced content is distributed for viewing by others on connected devices. These cloud-based services may allow a user equipment device to store content to the cloud and to receive content from the cloud rather than storing content locally and accessing locally-stored content.

A user may use various content capture devices, such as camcorders, digital cameras with video mode, audio recorders, mobile phones, and handheld computing devices, to record content. The user can upload content to a content storage service on the cloud either directly, for example, from user computer equipment 804 or wireless user communications device 806 having content capture feature. Alternatively, the user can first transfer the content to a user equipment device, such as user computer equipment 804. The user equipment device storing the content uploads the content to the cloud using a data transmission service on communications network 814. In some embodiments, the user equipment device itself is a cloud resource, and other user equipment devices can access the content directly from the user equipment device on which the user stored the content.

Cloud resources may be accessed by a user equipment device using, for example, a web browser, a media guidance application, a desktop application, a mobile application, and/or any combination of access applications of the same. The user equipment device may be a cloud client that relies on cloud computing for application delivery, or the user equipment device may have some functionality without access to cloud resources. For example, some applications running on the user equipment device may be cloud applications, i.e., applications delivered as a service over the Internet, while other applications may be stored and run on the user equipment device. In some embodiments, a user device may receive content from multiple cloud resources simultaneously. For example, a user device can stream audio from one cloud resource while downloading content from a second cloud resource. Or a user device can download content from multiple cloud resources for more efficient downloading. In some embodiments, user equipment devices can use cloud resources for processing operations such as the processing operations performed by processing circuitry described in relation to FIG. 7.

As referred herein, the term "in response to" refers to initiated as a result of. For example, a first action being performed in response to a second action may include interstitial steps between the first action and the second action. As referred herein, the term "directly in response to" refers to caused by. For example, a first action being performed directly in response to a second action may not include interstitial steps between the first action and the second action.

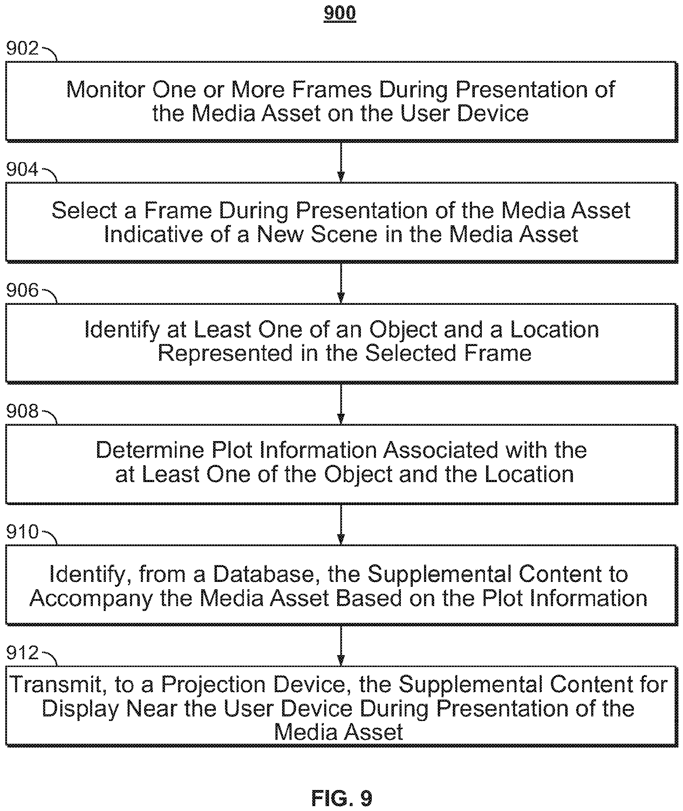

FIG. 9 is a flowchart of illustrative steps involved in selecting supplemental content for display near a user device during presentation of a media asset on the user device, in accordance with some embodiments of the disclosure. FIG. 9 presents a process for control circuitry (e.g., control circuitry 704) to identify a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other sub-circuits contained within control circuitry 704, such as the tuning, video generating, encoding, decoding, encrypting, decrypting, scaling, analog/digital conversion circuitry, and the like.

At 902, control circuitry 704 monitors one or more frames during presentation of the media asset on the user device. The user device may be a television, a tablet, a smart phone or any other user device which displays a media asset. For example, control circuitry 704 may monitor the movie as it is displayed on the television. Process 900 proceeds to 904.

At 904, control circuitry 704 selects a frame during presentation of the media asset indicative of a new scene in the media asset. For example, control circuitry 704 may, through the monitoring of the movie, select a frame which starts a new scene of the movie. In another example, the movie or other media asset may have tags indicating each new scene and through monitoring the movie and the scene tags, control circuitry 704 may select a frame which has been tagged as starting a new scene. Process 900 proceeds to 906.

At 906, control circuitry 704 identifies at least one of an object and a location represented in the selected frame. For example, control circuitry 704 may analyze the frame to determine objects in the frame. In some embodiments, control circuitry 704 identifies key features in the selected frame. The key features are pieces of information describing elements of the frame and may describe specific structural elements such as edges, comers, points, lines, ridges, or regions of the image present in the frame. For example, control circuitry 704 may analyze the frame using edge detection and determine the presence of a series of edges is present in the frame. In some embodiments, control circuitry 704 compares the identified key features to an objects database. For example, control circuitry 704 may access a database which includes objects associated with key features such as edges, and compare the edges found in the frame with the edges associated with each object in the database of objects. In some embodiments, control circuitry 704 identifies the object in the selected frame based on the comparing. For example, based on the comparing, control circuitry 704 may determine that some of the edges found in the frame are associated with a tree. In another example, control circuitry 704 may determine that some of the edges found in the frame are associated with a bird.

In some embodiments, control circuitry 704 searches an actions database based on the object in the selected frame. For example, control circuitry 704 may search an actions database associating objects with actions, searching for any actions associated with a bird. In some embodiments, control circuitry 704 identifies an action associated with the object which is occurring in the selected frame. For example, based on the actions database, control circuitry 704 may identify that a bird in the orientation as shown in the frame is associated with the action of flying, rather than being perched on a tree branch. In another example, control circuitry 704 may identify the action of sailing based on identifying a ship in the frame.

In some embodiments, control circuitry 704 searches a location database for a location associated with the object. For example, the media guidance application may search the locations database for a location which is associated with a tree. In some embodiments, control circuitry 704 identifies the location in the selected frame based on the location associated with the object. For example, control circuitry 704 may determine that the location associated with the frame is a generic outside scene in a tropical climate based on the presence of a lone palm tree.

In some embodiments, control circuitry 704 compares the key features of the selected frame to a location database which includes analysis of representations of locations. The key features are pieces of information describing elements of the frame and may describe specific structural elements such as edges, comers, points, lines, ridges, or regions of the image present in the frame. For example, control circuitry 704 may analyze the frame to determine features of the image of the frame. In some embodiments, control circuitry 704 determines the location represented in the selected frame based on comparing the key features of the selected frame to the analysis of representations of locations. For example, control circuitry 704 may determine based on the features of the image that the frame is displaying a forest. Process 900 proceeds to step 908.

At step 908, control circuitry 704 determines plot information associated with the at least one of the object and the location. For example, control circuitry 704 may determine keywords associated with the plot based on the object identified in the scene. In some embodiments, control circuitry 704 searches a plot information database to identify plot information associated with the at least one of the object and the location, and the action occurring in the selected frame. The plot information may include keywords describing a plot of the selected frame. For example, if control circuitry 704 identified a cruise ship, palm trees, and clouds to determine the action of sailing and the location of a generic tropical climate, control circuitry 704 may search the plot information database and identify the plot information in the form of the keywords, "desert island", "ocean", "ship", "sailing", "storm", and "waves". In some embodiments, the guidance application determines common keywords associated with the at least one of the object and the location, and the action. For example, the location of a generic tropical climate or action of sailing may be associated with additional plot information such as "fishing". However, as "fishing" is not associated with any of the objects identified, cruise ship, palm trees, and clouds, it is not a common keyword. In some embodiments, control circuitry 704 determines identified plot information based on the common keywords.

In some embodiments, control circuitry 704 retrieves metadata associated with the selected frame. The metadata can include closed captioning data and tags associated with the selected frame. In some embodiments, control circuitry 704 searches a plot information database for plot information associated with the at least one of the object and the location, and the metadata. For example, control circuitry 704 may retrieve closed captioning associated with the scene and search the plot information database for plot information keywords associated with the terms identified in the closed captioning data. Process 900 proceeds to 910.

At 910, control circuitry 704 identifies, from a database, the supplemental content to accompany the media asset based on the plot information. For example, control circuitry 704 may identify supplemental content with a tropical island and the ocean based on the plot information. The supplemental content may be a specific background image to be displayed on the wall of the room near the television or a set of images with a common theme to be displayed around an area based on the regions determined to be available. The supplemental content may include visual images as well as alternate forms of media such as a set of sounds, or video clips which can be played as needed. Process 900 proceeds to 912.

At 912, control circuitry 704 transmits, to a projection device, the supplemental content for display near the user device during presentation of the media asset. For example, control circuitry 704 may transmit the supplemental content displaying a tropical island and an ocean to be displayed on the wall via projector. The media guidance display may transmit the supplemental content to any display device in the area of the user device, such as another television screen, a tablet, or a set of augmented reality glasses. In some embodiments, control circuitry 704 transmits, to a speaker, a set of sounds which is included in the supplemental content. For example, control circuitry 704 may also transmit sounds of waves to the speakers.

In some embodiments, control circuitry 704 creates new supplemental content from a portion of the selected frame. In some embodiments, control circuitry 704 stores the new supplemental content in the database along with common keywords associated with the at least one of the object and the location. For example, control circuitry 704 may create new supplemental content using a section of the frame that shows blue sky and clouds, and store the supplemental content in the supplemental content database associated with the plot information that is found associated with clouds in the plot information database.

In some embodiments, control circuitry 704 selects a next frame during presentation of the media asset indicative of a next scene. For example, control circuitry 704 may select the frame associated with the next tag indicating a new scene. In some embodiments, control circuitry 704 determines a duration of the new scene based on the selected frame and the selected next frame. For example, control circuitry 704 may determine the length of the scene by comparing the frame of the first new scene and the frame which starts the next new scene. In some embodiments, control circuitry 704 transmits the supplemental content for display for the duration of the new scene. For example, control circuitry 704 may maintain the display of the supplemental content until the movie reaches the point in playback with the start of the next new scene.

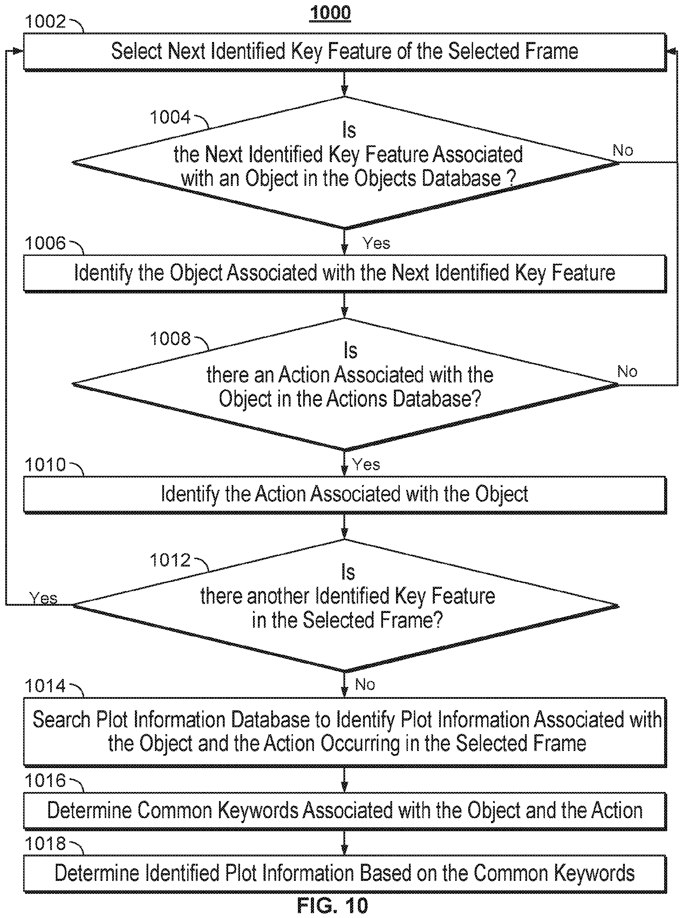

It is contemplated that the steps or descriptions of FIG. 9 may be used with any other embodiment of this disclosure. In addition, the descriptions described in relation to the algorithm of FIG. 9 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 9 may be implemented on a combination of appropriately configured software and hardware, and that any of the devices or equipment discussed in relation to FIGS. 10-14 could be used to implement one or more portions of the process.

FIG. 10 is a flowchart of illustrative steps for determining plot information associated with the selected frame, in accordance with some embodiments of the disclosure. FIG. 10 presents a process for control circuitry (e.g., control circuitry 704) to identify a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other sub-circuits contained within control circuitry 704, such as the tuning, video generating, encoding, decoding, encrypting, decrypting, scaling, analog/digital conversion circuitry, and the like.

At 1002, control circuitry 704 selects the next key feature of the selected frame. For example, if the control circuitry 704 had identified multiple regions of the frame as key features, the control circuitry 704 would select the next region of the frame. Process 1000 proceeds to 1004.

At 1004, control circuitry 704 determines whether the next identified key feature is associated with an object in the database of objects. For example, control circuitry 704 may access an objects database to determine if any of the objects in the database are associated with a region similar to the one found in the frame. If the next identified key feature is associated with an object in the database of objects, process 1000 proceeds to 1006. Otherwise, process 1000 proceeds to 1002.

At 1006, control circuitry 704 identifies the object associated with the next identified key feature. For example, control circuitry 704 may determine that the region identified in the frame is associated with a lone palm tree. In another example, control circuitry 704 may determine that the region in the frame is associated with a bird in midair. Process 1000 proceeds to 1008.

At 1008, control circuitry 704 determines whether there is an action associated with the object in the actions database. For example, the identified object of a bird in midair may be associated with the action of flying instead of the action of perching on a tree branch based on the objects associated with each action in the action database. If control circuitry 704 determines an action associated with the object, process 1000 proceeds to 1010. Otherwise, process 1 000 proceeds to 1002.

At 1010, control circuitry 704 identifies the action associated with the object based on the actions database. For example, control circuitry 704 may identify that the object of a bird in midair is associated with the action of flying. Process 1000 proceeds to 1012.

At 1012, control circuitry 704 determines whether there is another identified key feature in the selected frame. If so, process 1000 proceeds to 1002. Otherwise, process 1000 proceeds to 1014.

At 1014, control circuitry 704 searches the plot information database to identify plot information associated with the object and the action occurring in the selected frame. For example, control circuitry 704 may look up plot information keywords associated with each object and action using a plot information database. Process 1000 proceeds to 1016.

At 1016, control circuitry 704 determines common keywords associated with the object and the action. For example, control circuitry 704 may determine the set of keywords identified from the plot information database which are associated with both the object and the action identified. Process 1000 proceeds to 1018.

At 1018, control circuitry 704 determines plot information based on the common keywords. For example, control circuitry 704 may determine the plot information from the set of keywords which is associated with both the object and the action identified.

It is contemplated that the steps or descriptions of FIG. 10 may be used with any other embodiment of this disclosure. In addition, the descriptions described in relation to the algorithm of FIG. 10 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 10 may be implemented on a combination of appropriately configured software and hardware, and that any of the devices or equipment discussed in relation to FIGS. 9-14 could be used to implement one or more portions of the process.

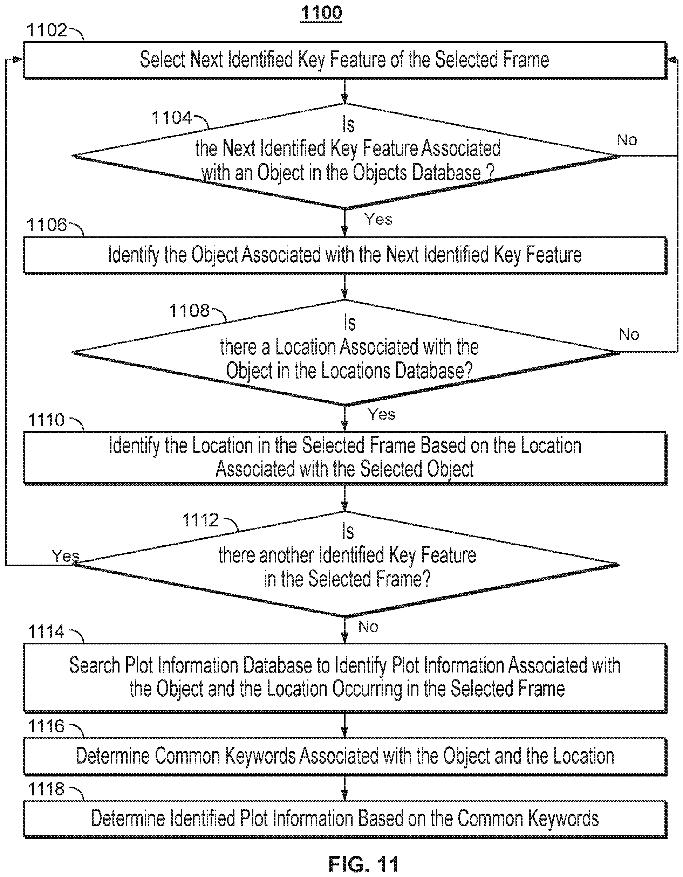

FIG. 11 is another flowchart of illustrative steps for determining plot information associated with the selected frame, in accordance with some embodiments of the disclosure. FIG. 11 presents a process for control circuitry (e.g., control circuitry 704) to identify a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other sub-circuits contained within control circuitry 704, such as the tuning, video generating, encoding, decoding, encrypting, decrypting, scaling, analog/digital conversion circuitry, and the like.

At 1102, control circuitry 704 selects the next key feature of the selected frame. For example, if the control circuitry 704 had identified multiple regions of the frame as key features, the control circuitry 704 would select the next region of the frame. Process 1100 proceeds to 1104.

At 1104, control circuitry 704 determines whether the next identified key feature is associated with an object in the database of objects. For example, control circuitry 704 may access an objects database to determine if any of the objects in the database are associated with a region similar to the one found in the frame. If the next identified key feature is associated with an object in the database of objects, process 1100 proceeds to 1106. Otherwise, process 1100 proceeds to 1102.

At 1106, control circuitry 704 identifies the object associated with the next identified key feature. For example, control circuitry 704 may determine that the region identified in the frame is associated with a lone palm tree. In another example, control circuitry 704 may determine that the region in the frame is associated with a bird in midair. Process 1100 proceeds to 1108.

At 1108, control circuitry 704 determines whether there is a location associated with the object in the location database. For example, the lone palm tree may be associated with a generic outside tropical environment. If control circuitry 704 determines a location associated with the object, process 1100 proceeds to 1110. Otherwise, process 1100 proceeds to 1102.

At 1110, control circuitry 704 identifies the location associated with the object based on the locations database. For example, control circuitry 704 may identify that the object the lone palm tree is associated with the generic outside tropical environment. Process 1100 proceeds to 1112.

At 1112, control circuitry 704 determines whether there is another identified key feature in the selected frame. If so, process 1100 proceeds to 1102. Otherwise, process 1100 proceeds to 1114.

At 1114, control circuitry 704 searches the plot information database to identify plot information associated with the at least one of the object and the location occurring in the selected frame. For example, control circuitry 704 may look up plot information keywords associated with each object and location using a plot information database. Process 1100 proceeds to 1116.

At 1116, control circuitry 704 determines common keywords associated with the at least one of the object and the location. For example, control circuitry 704 may determine the set of common keywords identified from the plot information database, which are associated with the objects and the locations identified. Process 1100 proceeds to 1118.

At 1118, control circuitry 704 determines plot information based on the common keywords. For example, control circuitry 704 may determine the plot information from the set of keywords which is associated with both the object and the location identified.

It is contemplated that the steps or descriptions of FIG. 11 may be used with any other embodiment of this disclosure. In addition, the descriptions described in relation to the algorithm of FIG. 11 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 11 may be implemented on a combination of appropriately configured software and hardware, and that any of the devices or equipment discussed in relation to FIGS. 9-14 could be used to implement one or more portions of the process.

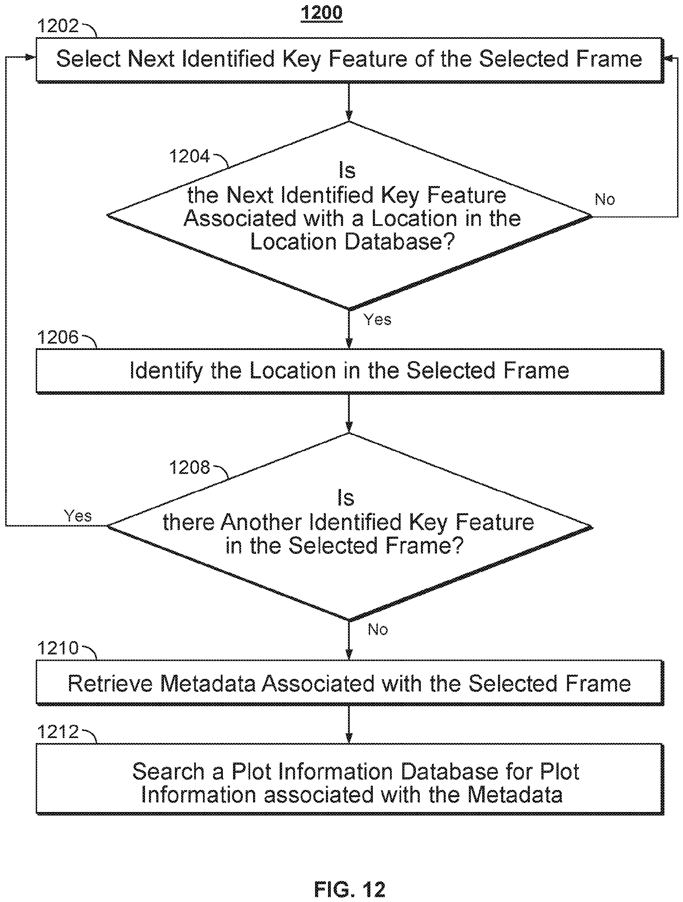

FIG. 12 is another flowchart of illustrative steps for determining plot information associated with the selected frame, in accordance with some embodiments of the disclosure. FIG. 12 presents a process for control circuitry (e.g., control circuitry 704) to identify a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other sub-circuits contained within control circuitry 704, such as the tuning, video generating, encoding, decoding, encrypting, decrypting, scaling, analog/digital conversion circuitry, and the like.

At 1202, control circuitry 704 selects the next key feature of the selected frame. For example, if the control circuitry 704 had identified multiple regions of the frame as key features, the control circuitry 704 would select the next region of the frame. Process 1200 proceeds to 1204.

At 1204, control circuitry 704 determines whether the next identified key feature is associated with a location in the location database. For example, the identified region may be associated with a generic forest. If the next identified key feature is associated with a location in the locations database, process 1200 proceeds to 1206. Otherwise, process 1200 proceeds to 1202.

At 1206, control circuitry 704 identifies the location associated with the selected frame. For example, control circuitry 704 may identify the frame is associated with a generic forest. Process 1200 proceeds to 1208.

At 1208, control circuitry 704 determines whether there is another identified key feature in the selected frame. If so, process 1200 proceeds to 1202. Otherwise, process 1200 proceeds to 1210.

At 1210, control circuitry 704 retrieves metadata associated with the selected frame. For example, control circuitry 304 may retrieve closed captioning data associated with the selected frame. Process 1200 proceeds to 1212.

At 1212, control circuitry 704 searches a plot information database for plot information associated with the metadata. For example, control circuitry 704 may search the plot information database using text retrieved as closed captioning data to identify plot information associated with the selected frame.

It is contemplated that the steps or descriptions of FIG. 12 may be used with any other embodiment of this disclosure. In addition, the descriptions described in relation to the algorithm of FIG. 12 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 12 may be implemented on a combination of appropriately configured software and hardware, and that any of the devices or equipment discussed in relation to FIGS. 9-14 could be used to implement one or more portions of the process.

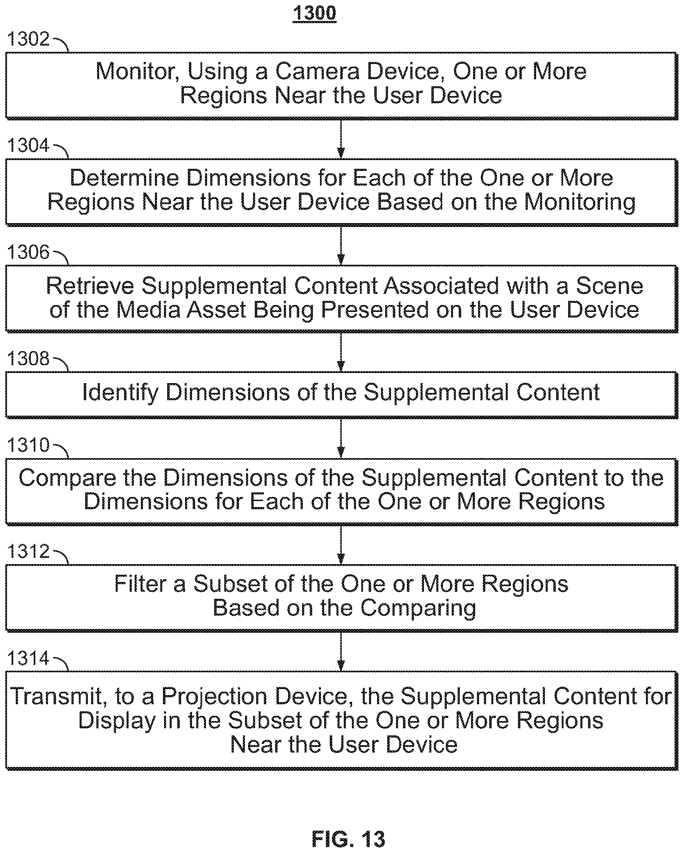

FIG. 13 is a flowchart of illustrative steps involved in determining a region near a user device for displaying supplemental content during presentation of a media asset on the user device. FIG. 13 presents a process for control circuitry (e.g., control circuitry 704) to identity a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other sub-circuits contained within control circuitry 704, such as the tuning, video generating, encoding, decoding, encrypting, decrypting, scaling, analog/digital conversion circuitry, and the like.

At 1302, control circuitry 704 monitors, using a camera device, one or more regions near the user device. For example, control circuitry 704 may analyze the room around the television based on camera feedback, identify sections of the room with walls or other surfaces which may be available for supplemental content, and monitor those sections. Process 1300 proceeds to 1304.

At 1304, control circuitry 704 determines dimensions for each of the one or more regions near the user device based on the monitoring. For example, control circuitry 704 may calculate the dimensions, size, and orientation of the walls and available surfaces around the room based on analysis of the room and monitoring. In some embodiments, control circuitry 704 analyzes the one or more regions near the user device for one or more portions that are suitable to display the supplemental content. For example, the media guidance application may identify a wall which is clear of any obstruction such as a painting hanging on the wall or a bookcase in the middle, and analyze the wall based on whether the wall section is available for the display of supplemental content. In some embodiments, control circuitry 704 selects a portion that is suitable for displaying the supplemental content based on the analysis. For example, control circuitry 704 may select an area of the wall which is not obstructed and therefore available to display supplemental content. In some embodiments, control circuitry 704 determines dimensions indicating the size, the shape, and the orientation of the one or more regions for the selected portion. For example, control circuitry 704 may select a region on the ceiling to be available for display of supplemental content and determine the dimensions, including the size of the space, as well as the orientation facing downwards and the shape of a donut so that the center fan or ceiling light is not included in the selected region. Process 1300 proceeds to 1306.

At 1306, control circuitry 704 retrieves supplemental content associated with a scene of the media asset being presented on the user device. For example, control circuitry 704 may retrieve supplemental content associated with the scene of a movie playing on the television from the supplemental content database. In some embodiments, control circuitry 704 identifies at least one of an object and a location represented in the scene. In some embodiments, control circuitry 704 identifies plot information associated with the scene based on the identified at least one of the object and the location. In some embodiments, control circuitry 704 searches a database of supplemental content for a supplemental content matching the plot information associated with the scene. Process 1300 proceeds to 1308.

At 1308, control circuitry 704 identifies dimensions of the supplemental content. For example, control circuitry 704 may determine the intended dimensions of the supplemental content based on tags associated with the supplemental content. In some embodiments, control circuitry 704 identifies one of a size, a shape, and an orientation of the supplemental content. For example, some supplemental content may be oriented to be seen from below or other supplemental content may be shaped like a donut. Process 1300 proceeds to 1310.

At 1310, control circuitry 704 compares the dimensions of the supplemental content to the dimensions for each of the one or more regions. In some embodiments, control circuitry 704 compares the dimensions of the supplemental content to the dimensions for each of the one or more regions, further comprises comparing the one of the size, the shape, and the orientation of each of the one or more regions to the one of the size, the shape, and the orientation of the supplemental content. For example, control circuitry 704 may compare the shape of the region to the shape of the supplemental content or the orientation of the region to the orientation of the supplemental content. Process 1300 proceeds to 1312.

At 1312, control circuitry 704 filters a subset of the one or more regions based on the comparing. For example, control circuitry 704 may filter the regions to identify the region which is available to display the identified supplemental content. In some embodiments, control circuitry 704 identifies an object associated with one of the one or more regions. For example, control circuitry 704 may identify that there is a bookcase in the region. In some embodiments, control circuitry 704 compares the object to known objects to determine whether the object is available to display the supplemental content. For example, control circuitry 704 may identify blinds covering a window, and after searching through the database of known objects, determine that the blinds covering a window are available to display supplemental content. In some embodiments, control circuitry 704 determines that the object is not available to display the supplemental content based on the comparing. For example, control circuitry 704 may search through a database of known objects to determine that the supplemental cannot be displayed on top of a bookcase. In some embodiments, control circuitry 704 removes the one of the one or more regions from the one or more regions. For example, control circuitry 704 may filter out the region with a bookcase from the regions available for display of supplemental content.

In some embodiments, control circuitry 704 identifies one of the one or more regions by identifying the one or more regions in which the size, the shape, and the orientation does not match the one of the size, the shape, and the orientation of the supplemental content. For example, control circuitry 704 may determine that the region is in the shape of a donut but the supplemental content is in the shape of a rectangle and so the supplemental content does not fit within the region. In some embodiments, control circuitry 704 removes the one of the one or more regions from the one or more regions. For example, control circuitry 704 may filter out the region that is in the shape of a donut from the regions available for display of supplemental content. Process 1300 proceeds to 1314.

At 1314, control circuitry 704 transmits, to a projection device, the supplemental content for display in the subset of the one or more regions near the user device. In some embodiments, control circuitry 704 transmits the supplemental content for display on each of the subset of the one or more regions. For example, control circuitry 704 may display the supplemental content on all of the remaining regions of the room which have been identified to be free of objects and are the appropriate size, shape, and orientation.

In some embodiments, control circuitry 704 ranks each of the subset of the one or more regions based on at least one of the dimensions of each region, location of each region, or content of supplemental content. For example, if the supplemental content is a wide landscape, control circuitry 704 may rank the regions and prioritize regions that are a large rectangle on the wall, rather than the ceiling. In some embodiments, control circuitry 704 determines one of the subset of the one or more regions to display the supplemental content based on the ranking. For example, control circuitry 704 may select the region which received the highest ranking. In some embodiments, control circuitry 704 transmits for display the supplemental content on the one of the subset of the one or more regions. For example, control circuitry 704 may display the supplemental content on the selected region which received the highest ranking.

In some embodiments, control circuitry 704 determines a plurality of portions of the supplemental content. For example, the supplemental content may be multiple images of different birds, each in different orientations, sizes and shapes. In some embodiments, control circuitry 704 matches each of the plurality of portions of the supplemental content to one of the subset of the one or more regions. For example, control circuitry 704 may match each of the images of birds to a region around the room based on the image's size, shape, and orientation. In some embodiments, control circuitry 704 generates for display each of the plurality of portions of the supplemental content on the corresponding one of the subset of the plurality of spaces. For example, control circuitry 704 may display each of the images on the corresponding regions around the room.

It is contemplated that the steps or descriptions of FIG. 13 may be used with any other embodiment of this disclosure. In addition, the descriptions described in relation to the algorithm of FIG. 13 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 13 may be implemented on a combination of appropriately configured software and hardware, and that any of the devices or equipment discussed in relation to FIGS. 9-14 could be used to implement one or more portions of the process.

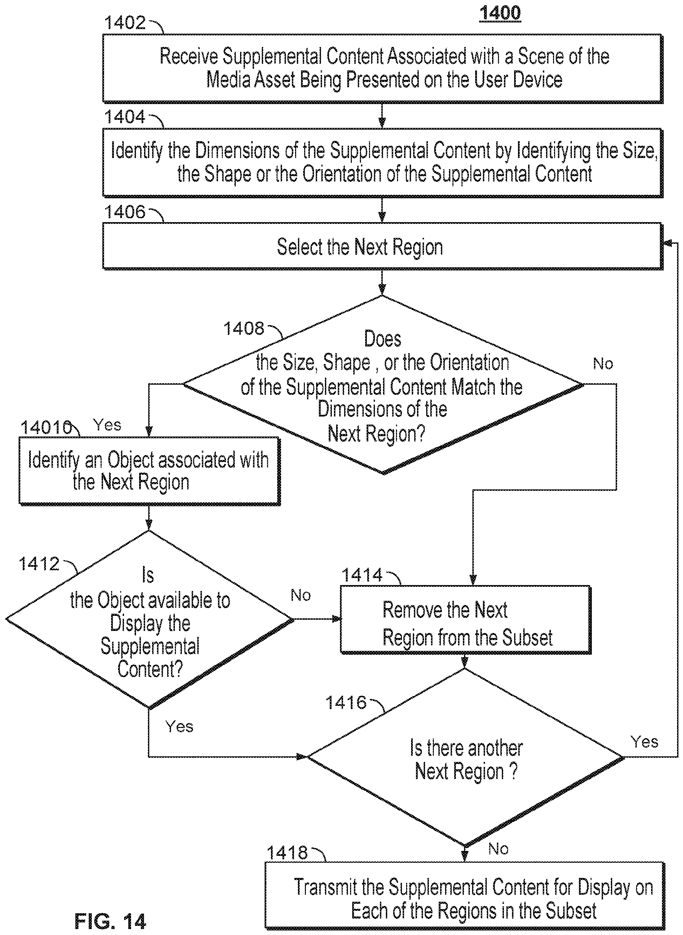

FIG. 14 is a flowchart of illustrative steps for filtering the regions to identify a subset of the regions near the user device available to display supplemental content. FIG. 14 presents a process for control circuitry (e.g., control circuitry 704) to identify a meaning of an ambiguous term in accordance with some embodiments of the disclosure. In some embodiments, this algorithm may be encoded on to non-transitory storage medium (e.g., storage device 708) as a set of instructions to be decoded and executed by processing circuitry (e.g., processing circuitry 706). Processing circuitry may, in turn, provide instructions to other subcircuits contained within control circuitry 704, such as the tuning, video generating, encoding, decoding, encrypting, decrypting, scaling, analog/digital conversion circuitry, and the like.

At 1402, control circuitry 704 retrieves supplemental content associated with a scene of the media asset being presented on the user device. For example, control circuitry 704 may identify objects in the scene by analyzing the key features, searching the plot information database for plot information related to the scene based on the identified objects, and selected supplemental content based on the plot information. Process 1400 proceeds to 1404.

At 1404, control circuitry 704 identifies the dimensions of the supplemental content by identifying the size, the shape, and the orientation of the supplemental content. For example, control circuitry 704 may determine that the supplemental content is oriented to be seen from below and is donut shaped with a blank spot in the center, as if for a light fixture. Process 1400 proceeds to 1406.

At 1406, control circuitry 704 selects the next region of the one or more regions. Process 1400 proceeds to 1408.

At 1408, control circuitry 704 determines whether the size, the shape, and the orientation of the supplemental content match the dimensions of the next region. If so, process 1400 proceeds to 1410. Otherwise, process 1400 proceeds to 1414.

At 1410, control circuitry 704 identifies an object associated with the next region. For example, control circuitry 704 may identify a bookcase which is present within the region. Process 1400 proceeds to 14012.

At 1412, control circuitry 704 determines whether the identified object is available to display the supplemental content. If so, process 1400 proceeds to 1416. Otherwise, process 1400 proceeds to 1414.

At 1414, control circuitry 704 removes the next region from the subset of the one or more regions. For example, if the control circuitry 704 has determined that a bookcase is not available to display supplemental content, the region including the bookcase is removed from consideration for the subset of regions which are available to display supplemental content. Process 1400 proceeds to 1416.

At 1416, control circuitry 704 determines whether there is another region in the one or more regions. If so, process proceeds to 1406. Otherwise, process 1400 proceeds to 1418.

At 1418, control circuitry 704 transmits the supplemental content for display onto each of the subset of the one or more regions. For example, control circuitry 704 may display the supplemental content on each of the regions around the room near the user device which have been identified as available for display of supplemental content.

It is contemplated that the steps or descriptions of FIG. 14 may be used with any other embodiment of this disclosure. In addition, the descriptions described in relation to the algorithm of FIG. 14 may be done in alternative orders or in parallel to further the purposes of this disclosure. For example, conditional statements and logical evaluations may be performed in any order or in parallel or simultaneously to reduce lag or increase the speed of the system or method. As a further example, in some embodiments several instances of a variable may be evaluated in parallel, using multiple logical processor threads, or the algorithm may be enhanced by incorporating branch prediction. Furthermore, it should be noted that the process of FIG. 14 may be implemented on a combination of appropriately configured software and hardware, and that any of the devices or equipment discussed in relation to FIGS. 9-13 could be used to implement one or more portions of the process.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

This specification discloses embodiments which include, but are not limited to, the following:
1. A method for selecting supplemental content for display near a user device during presentation of a media asset on the user device, the method comprising:
   monitoring one or more frames during presentation of the media asset on the user device;
   selecting a frame during presentation of the media asset indicating a new scene in the media asset;
   identifying at least one of an object and a location represented in the selected frame;
   determining plot information associated with the at least one of the object and the location;
   identifying, from a database, the supplemental content to accompany the media asset based on the plot information; and
   transmitting, to a projection device, the supplemental content for display near the user device during presentation of the media asset.
2. The method of item 1, wherein identifying the at least one of the object and the location represented in the selected frame comprises:
   identifying key features in the selected frame;
   comparing the identified key features to an objects database;
   identifying the object represented in the selected frame based on the comparing;
   searching an actions database based on the object in the selected frame;
   identifying an action occurring in the selected frame, wherein the action is associated with the object.
3. The method of item 2, wherein determining the plot information associated with the at least one of the object and the location further comprises:
   searching a plot information database to identify plot information associated with the at least one of the object and the location and the action occurring in the selected frame, wherein the plot information includes keywords describing a plot of the selected frame;
   determining common keywords associated with the at least one of the object and the location and the action; and
   determining identified plot information based on the common keywords.
4. The method of item 1, wherein identifying the at least one of the object and the location represented in the selected frame comprises:
   identifying key features in the selected frame;
   comparing the identified key features to an objects database; identifying the object in the selected frame based on the comparing;
   searching a location database for a location associated with the object; and
   identifying the location in the selected frame based on the location associated with the object.
5. The method of item 1, wherein identifying the at least one of the object and the location represented in the selected frame comprises:
   identifying key features in the selected frame;
   comparing the key features of the selected frame to a location database, wherein the location database includes analysis of representations of locations; and
   determining the location represented in the selected frame based on comparing the key features of the selected frame to the analysis of representations of locations.
6. The method of item 1, wherein determining plot information associated with the at least one of the object and the location further comprises:
   retrieving metadata associated with the selected frame, wherein the metadata includes one of closed captioning data and tags associated with the selected frame; and
   searching a plot information database for plot information associated with the object and the location, and the metadata, wherein the plot information includes keywords describing a plot of the selected frame.
7. The method of item 1, further comprising:
   creating new supplemental content from a portion of the selected frame; and
   storing the new supplemental content in the database along with common keywords associated with the at least one of the object and the location.
8. The method of item 1, wherein transmitting, to the projection device, the supplemental content for display near the user device during presentation of the media asset further comprises transmitting, to a speaker, a set of sounds, wherein the supplemental content includes an image for display near the user device and the set of sounds.
9. The method of item 1, further comprising:
   selecting a next frame during presentation of the media asset indicative of a next scene; and
   determining a duration of the new scene based on the selected frame and the selected next frame.
10. The method of item 9, wherein transmitting, to the projection device, the supplemental content for display near the user device during presentation of the media asset further comprises transmitting, to the projection device, the supplemental content for the duration of the new scene.
11. A system for selecting supplemental content for display near a user device during presentation of a media asset on the user device, the system comprising control circuitry configured to:
   monitor one or more frames during presentation of the media asset on the user device;
   select a frame during presentation of the media asset indicating a new scene in the media asset;
   identify at least one of an object and a location represented in the selected frame;
   determine plot information associated with the at least one of the object and the location;
   identify, from a database, the supplemental content to accompany the media asset based on the plot information; and
   transmit, to a projection device, the supplemental content for display near the user device during presentation of the media asset.
12. The system of item 11, wherein the control circuitry configured to identify the at least one of the object and the location represented in the selected frame is further configured to:
   identify key features in the selected frame;
   compare the identified key features to an objects database: identify the object in the selected frame based on the comparing;
   search an actions database based on the object in the selected frame;
   identify an action occurring in the selected frame, wherein the action is associated with the object.
13. The system of item 12, wherein the control circuitry configured to determine the plot information associated with the at least one of the object and the location is further configured to:
   search a plot information database to identify plot information associated with the object and the location and the action occurring in the selected frame, wherein the plot information includes keywords describing a plot of the selected frame;
   determine common keywords associated with the object and the location and the action; and
   determine identified plot information based on the common keywords.
14. The system of item 11, wherein the control circuitry configured to identify the at least one of the object and the location represented in the selected frame is further configured to:
   identify key features in the selected frame;
   compare the identified key features to an objects database; identify the object in the selected frame based on the comparing;
   search a location database for a location associated with the object; and
   identify the location in the selected frame based on the location associated with the object.
15. The system of item 11, wherein the control circuitry configured to identify the at least one of the object and the location represented in the selected frame is configured to:
   identify key features in the selected frame;
   compare the key features of the selected frame to a location database, wherein the location database includes analysis of representations of locations; and
   determine the location represented in the selected frame based on comparing the key features of the selected frame to the analysis of representations of locations.
16. The system of item 11, wherein the control circuitry configured to determine plot information associated with the at least one of the object and the location is further configured to:
   retrieve metadata associated with the selected frame, wherein the metadata includes one of closed captioning data and tags associated with the selected frame; and
   search a plot information database for plot information associated with the at least one of the object and the location, and the metadata, wherein the plot information includes keywords describing a plot of the selected frame.
17. The system of item 11, further comprising control circuitry configured to:
   create new supplemental content from a portion of the selected frame; and
   store the new supplemental content in the database along with common keywords associated with the at least one of the object and the location.
18. The system of item 11, wherein the control circuitry configured to transmit, to the projection device, the supplemental content for display near the user device during presentation of the media asset is further configured to transmit, to a speaker, a set of sounds, wherein the supplemental content includes an image for display near the user device and the set of sounds.
19. The system of item 11, further comprising control circuitry configured to:
   select a next frame during presentation of the media asset indicative of a next scene; and
   determine a duration of the new scene based on the selected frame and the selected next frame.
20. The system of item 19, wherein the control circuitry configured to transmit. to the projection device, the supplemental content for display near the user device during presentation of the media asset is further configured to transmit, to the projection device, the supplemental content for the duration of the new scene.
21. A system for selecting supplemental content for display near a user device during presentation of a media asset on the user device, the system comprising:
   means for monitoring one or more frames during presentation of the media asset on the user device;
   means for selecting a frame during presentation of the media asset indicating a new scene in the media asset;
   means for identifying at least one of an object and a location represented in the selected frame;
   means for determining plot information associated with the at least one of the object and the location;
   means for identifying, from a database, the supplemental content to accompany the media asset based on the plot information; and
   means for transmitting, to a projection device, the supplemental content for display near the user device during presentation of the media asset.
22. The system of item 21, wherein the means for identifying the at least one of the object and the location represented in the selected frame comprises:
   means for identifying key features in the selected frame; means for comparing the identified key features to an objects database;
   means for identifying the object in the selected frame based on the comparing;
   means for searching an actions database based on the object in the selected frame; and
   means for identifying an action occurring in the selected frame, wherein the action is associated with the object.
23. The system of item 22, wherein the means for determining the plot information associated with the at least one of the object and the location further comprises:
   means for searching a plot information database to identify plot information associated with the at least one of the object and the location and the action occurring in the selected frame, wherein the plot information includes keywords describing a plot of the selected frame;
   means for determining common keywords associated with the at least one of the object and the location and the action; and
   means for determining identified plot information based on the common keywords.
24. The system of item 21, wherein the means for identifying the at least one of the object and the location represented in the selected frame comprises:
   means for identifying key features in the selected frame; means for comparing the identified key features to an objects database;
   means for identifying the object in the selected frame based on the comparing; means for searching a location database for a location associated with the object; and
   means for identifying the location in the selected frame based on the location associated with the object.
25. The system of item 21, wherein the means for identifying the at least one of the object and the location represented in the selected frame comprises:
   means for identifying key features in the selected frame;
   means for comparing the key features of the selected frame to a location database, wherein the location database includes analysis of representations of locations; and
   means for determining the location represented in the selected frame based on comparing the key features of the selected frame to the analysis of representations of locations.
26. The system of item 21, wherein the means for determining plot information associated with the at least one of the object and the location further comprises:
   means for retrieving metadata associated with the selected frame, wherein the metadata includes one of closed captioning data and tags associated with the selected frame; and
   means for searching a plot information database for plot information associated with the at least one of the object and the location. and the metadata, wherein the plot information includes keywords describing a plot of the selected frame.
27. The system of item 21, further comprising:
   means for creating new supplemental content from a portion of the selected frame; and
   means for storing the new supplemental content in the database along with common keywords associated with the at least one of the object and the location.
28. The system of item 21, wherein the means for transmitting, to the projection device, the supplemental content for display near the user device during presentation of the media asset further comprises means for transmitting, to a speaker, a set of sounds, wherein the supplemental content includes an image for display near the user device and the set of sounds.
29. The system of item 21, further comprising:
   means for selecting a next frame during presentation of the media asset indicative of a next scene; and
   means for determining a duration of the new scene based on the selected frame and the selected next frame.
30. The system of item 29, wherein the means for transmitting, to the projection device, the supplemental content for display near the user device
   during presentation of the media asset further comprises means for transmitting, to the projection device, the supplemental content for the duration of the new scene.
31. A non-transitory machine readable medium comprising instructions encoded thereon for selecting supplemental content for display near a user device during presentation of a media asset on the user device, the instructions comprising:
   instructions to monitor one or more frames during presentation of the media asset on the user device;
   instructions to select a frame during presentation of the media asset indicating a new scene in the media asset;
   instructions to identify at least one of an object and a location represented in the selected frame;
   instructions to determine plot information associated with the at least one of the object and the location;
   instructions to identify, from a database, the supplemental content to accompany the media asset based on the plot information; and
   instructions to transmit, to a projection device, the supplemental content for display near the user device during presentation of the media asset.
32. The non-transitory computer readable medium of item 31, wherein the instructions to identify the at least one of the object and the location represented in the selected frame further comprise:
   instructions to identify key features in the selected frame;
   instructions to compare the identified key features to an objects database;
   instructions to identify the object in the selected frame based on the comparing;
   instructions to search an actions database based on the object in the selected frame;
   instructions to identify an action occurring in the selected frame, wherein the action is associated with the object.
33. The non-transitory' computer readable medium of item 32, wherein the instructions to determine the plot information associated with the at least one of the object and the location further comprises:
   instructions to search a plot information database to identify plot information associated with the at least one of the object and the location and the action occurring in the selected frame, wherein the plot information includes keywords describing a plot of the selected frame;
   instructions to determine common keywords associated with the at least one of the object and the location and the action; and
   instructions to determine identified plot information based on the common keywords.
34. The non-transitory computer readable medium of item 31, wherein the instructions to identify the at least one of the object and the location represented in the selected frame further comprises:
   instructions to identify key features in the selected frame;
   instructions to compare the identified key features to an objects database;
   instructions to identify the object in the selected frame based on the comparing;
   instructions to search a location database for a location associated with the object; and
   instructions to identify the location in the selected frame based on the location associated with the object.
35. The non-transitory computer readable medium of item 31, wherein the instructions to identify the at least one of the object and the location represented in the selected frame further comprises:
   instructions to identify key features in the selected frame;
   instructions to compare the key features of the selected frame to a location database, wherein the location database includes analysis of representations of locations; and
   instructions to determine the location represented in the selected frame based on comparing the key features of the selected frame to the analysis of representations of locations.
36. The non-transitory computer readable medium of item 31, wherein the instructions to determine plot information associated with the at least one of the object and the location further comprises:
   instructions to retrieve metadata associated with the selected frame, wherein the metadata includes one of closed captioning data and tags associated with the selected frame; and
   instructions to search a plot information database for plot information associated with the at least one of the object and the location, and the metadata, wherein the plot information includes keywords describing a plot of the selected frame.
37. The non-transitory• computer readable medium of item 31, further comprising:
   instructions to create new supplemental content from a portion of the selected frame; and
   instructions to store the new supplemental content in the database along with common keywords associated with the at least one of the object and the location.
38. The non-transitory computer readable medium of item 31, wherein the instructions to transmit, to the projection device, the supplemental content for display near the user device during presentation of the media asset further comprises instructions to transmit, to a speaker, a set of sounds, wherein the supplemental content includes an image for display near the user device and the set of sounds.
39. The non-transitory computer readable medium of item 31, further comprising:
   instructions to select a next frame during presentation of the media asset indicative of a next scene; and
   instructions to determine a duration of the new scene based on the selected frame and the selected next frame.
40. The non-transitory computer readable medium of item 39, wherein the instructions to transmit, to the projection device, the supplemental content for display near the user device during presentation of the media asset further comprises instructions to transmit, to the projection device, the supplemental content for the duration of the new scene.
41. A method for selecting supplemental content for display near a user device during presentation of a media asset on the user device, the method comprising:
   monitoring one or more frames during presentation of the media asset on the user device;
   selecting a frame during presentation of the media asset indicating a new scene in the media asset;
   identifying at least one of an object and a location represented in the selected frame;
   determining plot information associated with the at least one of the object and the location;
   identifying, from a database, the supplemental content to accompany the media asset based on the plot information; and
   transmitting the supplemental content, to a projection device, for display near the user device during presentation of the media asset.
42. The method of item 41. wherein identifying the at least one of the object and the location represented in the selected frame comprises:
   identifying key features in the selected frame;
   comparing the identified key features to an objects database;
   identifying the object in the selected frame based on the comparing;
   searching an actions database based on the object in the selected frame; and
   identifying an action occurring in the selected frame, wherein the action is associated with the object.
43. The method of item 42, wherein determining the plot information associated with the at least one of the object and the location further comprises:
   searching a plot information database to identify plot information associated with the at least one of the object and the location and the action occurring in the selected frame, wherein the plot information includes keywords describing a plot of the selected frame;
   determining common keywords associated with the at least one of the object and the location and the action; and
   determining identified plot information based on the common keywords.
44. The method of item 41-43. wherein identifying the at least one of the object and the location represented in the selected frame comprises: identifying key features in the selected frame;
   comparing the identified key features to an objects database;
   identifying the object in the selected frame based on the comparing;
   searching a location database for a location associated with the object; and
   identifying the location in the selected frame based on the location associated with the object.
45. The method of any of items 41-44, wherein identifying the at least one of the object and the location represented in the selected frame comprises:
   identifying key features in the selected frame;
   comparing the key features of the selected frame to a location database, wherein the location database includes analysis of representations of locations; and
   determining the location represented in the selected frame based on comparing the key features of the selected frame to the analysis of representations of locations.
46. The method of any of items 41-45, wherein determining plot information associated with the at least one of the object and the location further comprises:
   retrieving metadata associated with the selected frame, wherein the metadata includes one of closed captioning data and tags associated with the selected frame; and
   searching a plot information database for plot information associated with the at least one of the object and the location, and the metadata, wherein the plot information includes keywords describing a plot of the selected frame.
47. The method of any of items 41-46, further comprising:
   creating new supplemental content from a portion of the selected frame; and
   storing the new supplemental content in the database along with common keywords associated with the at least one of the object and the location.
48. The method of any of items 41-47, wherein transmitting, to the projection device, the supplemental content for display near the user device during presentation of the media asset further comprises transmitting, to a speaker, a set of sounds, wherein the supplemental content includes an image for display near the user device and the set of sounds.
49. The method of any of items 41-48, further comprising:
   selecting a next frame during presentation of the media asset indicative of a next scene; and
   determining a duration of the new scene based on the selected frame and the selected next frame.
50. The method of item 49, wherein transmitting, to the projection device, the supplemental content for display near the user device during presentation of the media asset further comprises transmitting, to the projection device, the supplemental content for the duration of the new scene.
51. A method for determining a region near a user device for displaying supplemental content during presentation of a media asset on the user device, the method comprising:
   monitoring, using a camera device, one or more regions near the user device;
   determining dimensions for each of the one or more regions near the user device based on the monitoring;
   receiving supplemental content associated with a scene of the media asset being presented on the user device;
   identifying dimensions of the supplemental content; comparing the dimensions of the supplemental content to the dimensions for each of the one or more regions;
   filtering a subset of the one or more regions based on the comparing; and
   transmitting, to a projection device, the supplemental content for display in the subset of the one or more regions near the user device.
52. The method of item 51. wherein determining the dimensions for each of the one or more regions near the user device comprises:
   analyzing the one or more regions near the user device for one or more portions that are suitable to display the supplemental content; selecting a portion that is suitable for displaying the supplemental content based on the analysis; and
   determining dimensions for the selected portion, wherein the dimensions indicate one of a size, a shape or an orientation of the one or more regions.
53. The method of item 52, wherein comparing the dimensions of the supplemental content to the dimensions for each of the one or more regions, further comprises comparing the one of the size, the shape, and the orientation of each of the one or more regions to the one of the size, the shape, and the orientation of the supplemental content.
54. The method of item 53, wherein filtering a subset of the one or more regions based on the comparing further comprises:
   identifying an object associated with one of the one or more regions;
   comparing the object to known objects from a database of known objects to determine whether the object is available to display the supplemental content;
   determining that the object is not available to display the supplemental content based on the comparing; and
   removing the one of the one or more regions from the one or more regions.
55. The method of item 53, wherein filtering a subset of the one or more regions based on the comparing further comprises:
   identifying one of the one or more regions, wherein the one of the size, the shape, and the orientation of the one of the one or more regions does not match the one of the size, the shape, and the orientation of the supplemental content; and
   removing the one of the one or more regions from the one or more regions.
56. The method of item 51, wherein receiving supplemental content associated with the scene of the media asset being presented on the user device, further comprises:
   identifying at least one of an object and a location represented in the scene;
   identifying plot information associated with the scene based on the identified at least one of the object and the location; and
   searching a database of supplemental content for a supplemental content matching the plot information associated with the scene.
57. The method of item 51, wherein identifying dimensions of the supplemental content further comprises identifying one of a size, a shape, and an orientation of the supplemental content.
58. The method of item 51, wherein transmitting, to a projection device, the supplemental content for display in the subset of the one or more regions near the user device further comprises:
   ranking each of the subset of the one or more regions based on at least one of the dimensions of each region, location of each region, or content of supplemental content;
   determining one of the subset of the one or more regions to display the supplemental content based on the ranking;
   transmitting for display the supplemental content on the one of the subset of the one or more regions.
59. The method of item 51, wherein transmitting, to the projection device, the supplemental content for display in the subset of the one or more regions near the user device further comprises:
   determining a plurality of portions of the supplemental content;
   matching each of the plurality of portions of the supplemental content to one of the subset of the one or more regions; and
   generating for display each of the plurality of portions of the supplemental content on the corresponding one of the subset of the plurality of spaces.
60. The method of item 51. wherein transmitting, to a projection device, the supplemental content for display in the subset of the one or more regions near the user device further comprises transmitting the supplemental content for display on each of the subset of the one or more regions.
61. A system for determining a region near a user device for displaying supplemental content during presentation of a media asset on the user device, the system comprising control circuitry configured to:
   monitor, using a camera device, one or more regions near the user device;
   determine dimensions for each of the one or more regions near the user device based on the monitoring;
   retrieve supplemental content associated with a scene of the media asset being presented on the user device;
   identify dimensions of the supplemental content;
   compare the dimensions of the supplemental content to the dimensions for each of the one or more regions;
   filter a subset of the one or more regions based on the comparing; and
   transmit, to a projection device, the supplemental content for display in the subset of the one or more regions near the user device.
62. The system of item 61, wherein control circuitry configured to determine the dimensions for each of the one or more regions near the user device is further configured to:
   analyze the one or more regions near the user device for one or more portions that are not suitable to display the supplemental content;
   select a portion that is suitable for displaying the supplemental content based on the analysis; and
   determine dimensions for the selected portion, wherein the dimensions indicate one of a size, a shape or an orientation of the one or more regions.
63. The system of item 62, wherein the control circuitry' configured to compare the dimensions of the supplemental content to the dimensions for each of the one or more regions is further configured to compare the one of the size, the shape, and the orientation of each of the one or more regions to the one of the size, the shape, and the orientation of the supplemental content.
64. The system of item 63, wherein the control circuitry configured to filter a subset of the one or more regions based on the comparing is further configured to:
   identify an object associated with one of the one or more regions;
   compare the object to known objects from a database of known objects to determine whether the object is available to display the supplemental content;
   determine that the object is not available to display the supplemental content based on the comparing; and
   remove the one of the one or more regions from the one or more regions.
65. The system of item 63, wherein the control circuitry configured to filter a subset of the one or more regions based on the comparing is further configured to:
   identify one of the one or more regions, wherein the one of the size, the shape, and the orientation of the one of the one or more regions does not match the one of the size, the shape, and the orientation of the supplemental content; and
   remove the one of the one or more regions from the one or more regions.
66. The system of item 61, wherein the control circuitry configured to retrieve supplemental content associated with the scene of the media asset being presented on the user device is further configured to:
   identify at least one of an object and a location represented in the scene;
   identify plot information associated with the scene based on the identified at least one of the object and the location; and
   search a database of supplemental content for a supplemental content matching the plot information associated with the scene.
67. The system of item 61, wherein the control circuitry• configured to identify dimensions of the supplemental content is further configured to identify one of a size, a shape, and an orientation of the supplemental content.
68. The system of item 61, wherein the control circuitry configured to transmit, to a projection device, the supplemental content for display in the subset of the one or more regions near the user device is further configured to:
   rank each of the subset of the one or more regions based on at least one of the dimensions of each region, location of each region, or content of supplemental content;
   determine one of the subset of the one or more regions to display the supplemental content based on the ranking;
   transmit for display the supplemental content on the one of the subset of the one or more regions.
69. The system of item 61, wherein the control circuitry configured to transmit, to the projection device, the supplemental content for display in the subset of the one or more regions near the user device is further configured to:
   determine a plurality of portions of the supplemental content;
   match each of the plurality of portions of the supplemental content to one of the subset of the one or more regions; and
   generate for display each of the plurality of portions of the supplemental content on the corresponding one of the subset of the plurality of spaces.
70. The system of item 61, wherein the control circuitry configured to transmit, to a projection device, the supplemental content for display in the subset of the one or more regions near the user device, is further configured to transmit the supplemental content for display on each of the subset of the one or more regions.
71. A system for determining a region near a user device for displaying supplemental content during presentation of a media asset on the user device, the system comprising:
   means for monitoring, using a camera device, one or more regions near the user device;
   means for determining dimensions for each of the one or more regions near the user device based on the monitoring;
   means for receiving supplemental content associated with a scene of the media asset being presented on the user device;
   means for identifying dimensions of the supplemental content;
   means for comparing the dimensions of the supplemental content to the dimensions for each of the one or more regions;
   means for filtering a subset of the one or more regions based on the comparing; and
   means for transmitting, to a projection device, the supplemental content for display in the subset of the one or more regions near the user device.
72. The system of item 71, wherein the means for determining the dimensions for each of the one or more regions near the user device comprises:
   means for analyzing the one or more regions near the user device for one or more portions that are not suitable to display the supplemental content;
   means for selecting a portion that is suitable for displaying the supplemental content based on the analysis; and
   means for determining dimensions for the selected portion, wherein the dimensions indicate one of a size, a shape or an orientation of the one or more regions.
73. The system of item 72, wherein the means for comparing the dimensions of the supplemental content to the dimensions for each of the one or more regions further comprises means for comparing the one of the size, the shape, and the orientation of each of the one or more regions to the one of the size, the shape, and the orientation of the supplemental content.
74. The system of item 73, wherein the means for filtering a subset of the one or more regions based on the comparing further comprises:
   means for identifying an object associated with one of the one or more regions;
   means for comparing the object to known objects from a database of known objects to determine whether the object is available to display the supplemental content;
   means for determining that the object is not available to display the supplemental content based on the comparing; and
   means for removing the one of the one or more regions from the one or more regions.
75. The system of item 73, wherein the means for filtering a subset of the one or more regions based on the comparing further comprises:
   means for identifying one of the one or more regions, wherein the one of the size, the shape, and the orientation of the one of the one or more regions does not match the one of the size, the shape, and the orientation of the supplemental content; and
   means for removing the one of the one or more regions from the one or more regions.
76. The system of item 71, wherein the means for receiving supplemental content associated with the scene of the media asset being presented on the user device further comprises:
   means for identifying at least one of an object and a location represented in the scene;
   means for identifying plot information associated with the scene based on the identified at least one of the object and the location; and
   means for searching a database of supplemental content for a supplemental content matching the plot information associated with the scene.
77. The system of item 71, wherein the means for identifying dimensions of the supplemental content further comprises means for identifying one of a size, a shape, and an orientation of the supplemental content.
78. The system of item 71, wherein the means for transmitting, to a projection device, the supplemental content for display in the subset of the one or more regions near the user device further comprises:
   means for ranking each of the subset of the one or more regions based on at least one of the dimensions of each region, location of each region, or content of supplemental content;
   means for determining one of the subset of the one or more regions to display the supplemental content based on the ranking;
   means for transmitting for display the supplemental content on the one of the subset of the one or more regions.
79. The system of item 71, wherein the means for transmitting, to the projection device, the supplemental content for display in the subset of the one or more regions near the user device further comprises:
   means for determining a plurality of portions of the supplemental content;
   means for matching each of the plurality of portions of the supplemental content to one of the subset of the one or more regions; and
   means for generating for display each of the plurality of portions of the supplemental content on the corresponding one of the subset of the plurality of spaces.
80. The system of item 71, wherein the means for transmitting, to a projection device, the supplemental content for display in the subset of the one or more regions near the user device further comprises means for transmitting the supplemental content for display on each of the subset of the one or more regions.
81. A non-transitory machine readable medium comprising instructions encoded thereon for displaying supplemental content during presentation of a media asset on the user device, the system comprising the instructions comprising:
   instructions to monitor, using a camera device, one or more regions near the user device;
   instructions to determine dimensions for each of the one or more regions near the user device based on the monitoring;
   instructions to retrieve supplemental content associated with a scene of the media asset being presented on the user device;
   instructions to identify dimensions of the supplemental content;
   instructions to compare the dimensions of the supplemental content to the dimensions for each of the one or more regions;
   instructions to filter a subset of the one or more regions based on the comparing; and
   instructions to transmit, to a projection device, the supplemental content for display in the subset of the one or more regions near the user device.
82. The non-transitory computer readable medium of item 81, wherein the instructions to determine the dimensions for each of the one or more regions near the user device further comprise:
   instructions to analyze the one or more regions near the user device for one or more portions that are not suitable to display the supplemental content;
   instructions to select a portion that is suitable for displaying the supplemental content based on the analysis; and
   instructions to determine dimensions for the selected portion, wherein the dimensions indicate one of a size, a shape or an orientation of the one or more regions.
83. The non-transitory computer readable medium of item 82, wherein the instructions to compare the dimensions of the supplemental content to the dimensions for each of the one or more regions further comprise instructions to compare the one of the size, the shape, and the orientation of each of the one or more regions to the one of the size, the shape, and the orientation of the supplemental content.
84. The non-transitory computer readable medium of item 83, wherein the instructions to filter a subset of the one or more regions based on the comparing further comprise:
   instructions to identify an object associated with one of the one or more regions;
   instructions to compare the object to known objects from a database of known objects to determine whether the object is available to display the supplemental content;
   instructions to determine that the object is not available to display the supplemental content based on the comparing; and
   instructions to remove the one of the one or more regions from the one or more regions.
85. The non-transitory computer readable medium of item 83, wherein the instructions to filter a subset of the one or more regions based on the comparing further comprise:
   instructions to identify one of the one or more regions, wherein the one of the size, the shape, and the orientation of the one of the one or more regions does not match the one of the size, the shape, and the orientation of the supplemental content; and
   instructions to remove the one of the one or more regions from the one or more regions.
86. The non-transitory computer readable medium of item 81, wherein the instructions to retrieve supplemental content associated with the scene of the media asset being presented on the user device further comprise:
   instructions to identify at least one of an object and a location represented in the scene;
   instructions to identify plot information associated with the scene based on the identified at least one of the object and the location; and
   instructions to search a database of supplemental content for a supplemental content matching the plot information associated with the scene.
87. The non-transitory computer readable medium of item 81, wherein the instructions to identify dimensions of the supplemental content further comprise instructions to identify one of a size, a shape, and an orientation of the supplemental content.
88. The non-transitory computer readable medium of item 81, wherein the instructions to transmit, to a projection device, the supplemental content for display in the subset of the one or more regions near the user device further comprise:
   instructions to rank each of the subset of the one or more regions based on at least one of the dimensions of each region, location of each region, or content of supplemental content;
   instructions to determine one of the subset of the one or more regions to display the supplemental content based on the ranking;
   instructions to transmit for display the supplemental content on the one of the subset of the one or more regions.
89. The non-transitory' computer readable medium of item 81, wherein the instructions to transmit, to the projection device, the supplemental content for display in the subset of the one or more regions near the user device further comprise:
   instructions to determine a plurality of portions of the supplemental content;
   instructions to match each of the plurality of portions of the supplemental content to one of the subset of the one or more regions; and
   instructions to generate for display each of the plurality of portions of the supplemental content on the corresponding one of the subset of the plurality of spaces.
90. The non-transitory computer readable medium of item 81, wherein the instructions to transmit, to a projection device, the supplemental content for display in the subset of the one or more regions near the user device further comprise instructions to transmit the supplemental content for display on each of the subset of the one or more regions.
91. A method for determining a region near a user device for displaying supplemental content during presentation of a media asset on the user device, the method comprising:
   monitoring, using a camera device, one or more regions near the user device;
   determining dimensions for each of the one or more regions near the user device based on the monitoring;
   receiving supplemental content associated with a scene of the media asset being presented on the user device;
   identifying dimensions of the supplemental content; comparing the dimensions of the supplemental content to the dimensions for each of the one or more regions;
   filtering a subset of the one or more regions based on the comparing; and
   transmitting the supplemental content, to a projection device, for display in the subset of the one or more regions near the user device.
92. The method of item 91, wherein determining the dimensions for each of the one or more regions near the user device comprises:
   analyzing the one or more regions near the user device for one or more portions that are not suitable to display the supplemental content;
   selecting a portion that is suitable for displaying the supplemental content based on the analysis; and
   determining dimensions for the selected portion, wherein the dimensions indicate one of a size, a shape or an orientation of the one or more regions.
93. The method of item 92, wherein comparing the dimensions of the supplemental content to the dimensions for each of the one or more regions further comprises comparing the one of the size, the shape, and the orientation of each of the one or more regions to the one of the size, the shape, and the orientation of the supplemental content.
94. The method of item 93, wherein filtering a subset of the one or more regions based on the comparing further comprises:
   identifying an object associated with one of the one or more regions;
   comparing the object to known objects from a database of known objects to determine whether the object is available to display the supplemental content;
   determining that the object is not available to display the supplemental content based on the comparing; and
   removing the one of the one or more regions from the one or more regions.
95. The method of item 93, wherein filtering a subset of the one or more regions based on the comparing further comprises:
   identifying one of the one or more regions, wherein the one of the size, the shape, and the orientation of the one of the one or more regions does not match the one of the size, the shape, and the orientation of the supplemental content; and
   removing the one of the one or more regions from the one or more regions.
96. The method of items 91-95, wherein receiving supplemental content associated with the scene of the media asset being presented on the user device further comprises:
   identifying at least one of an object and a location represented in the scene;
   identifying plot information associated with the scene based on the identified at least one of the object and the location; and
   searching a database of supplemental content for a supplemental content matching the plot information associated with the scene.
97. The method of any of items 91-96, wherein identifying dimensions of the supplemental content further comprises identifying one of a size, a shape, and an orientation of the supplemental content.
98. The method of any of items 91-97, wherein transmitting, to a projection device, the supplemental content for display in the subset of the one or more regions near the user device further comprises:
   ranking each of the subset of the one or more regions based on at least one of the dimensions of each region, location of each region, or content of supplemental content;
   determining one of the subset of the one or more regions to display the supplemental content based on the ranking;
   transmitting for display the supplemental content on the one of the subset of the one or more regions.
99. The method of any of items 91-98, wherein transmitting, to the projection device, the supplemental content for display in the subset of the one or more regions near the user device further comprises:
   determining a plurality of portions of the supplemental content;
   matching each of the plurality of portions of the supplemental content to one of the subset of the one or more regions; and
   generating for display each of the plurality of portions of the supplemental content on the corresponding one of the subset of the plurality of spaces.
100. The method of any of items 91-99, wherein transmitting, to a projection device, the supplemental content for display in the subset of the one or more regions near the user device further comprises transmitting the supplemental content for display on each of the subset of the one or more regions.

## Claims

1. A method comprising:
monitoring one or more regions near a user device;
determining, based on the monitoring, dimensions for each of one or more regions near the user device;
retrieving supplemental content associated with a scene of a media asset being presented on the user device;
identifying dimensions of the supplemental content;
comparing the dimensions of the supplemental content to the dimensions for each of the one or more regions;
filtering, based on the comparing, a subset of the one or more regions; and
transmitting the supplemental content for display in the subset of the one or more regions near the user device.

2. The method of claim 1, wherein the monitoring the one or more regions near the user device further comprises identifying sections of surfaces near the user device that are available for the supplemental content and monitoring those available sections.

3. The method of claim 2, wherein the determining the dimensions for each of the one or more regions further comprises calculating, based on analysis and monitoring of the available sections near the user device, dimensions, size and orientation of the available sections.

4. The method of claim 1, wherein the method further comprises analysing the one or more regions near the user device to identify, based on one or more portions of a surface being clear of any identified obstruction, one or more portions of the surface that are suitable to display the supplemental content.

5. The method of claim 1, wherein retrieving the supplemental content comprises retrieving the supplemental content from a supplemental content database.

6. The method of claim 1, wherein retrieving the supplemental content further comprises:
identifying at least one of an object and a location represented in the scene;
identifying, based on the identified at least one of the object and the location, plot information associated with the scene; and
retrieving the supplemental content based on plot information.

7. The method of claim 1, wherein the identifying the dimensions of the supplemental content comprises identifying the dimensions of the supplemental content based on tags associated with the supplemental content.

8. The method of claim 1, wherein identifying the dimensions of the supplemental content further comprises identifying an orientation of the supplemental content.

9. The method of claim 1, wherein comparing the dimensions of the supplemental content to the dimensions for each of the one or more regions comprises comparing an orientation or shape of a region to a respective orientation or shape of the supplemental content.

10. The method of claim 1, wherein the filtering the subset of the one or more regions further comprises:
determining that the supplemental content does not fit within a first region of the one or more regions; and
removing the first region from the one or more regions.

11. The method of claim 1, wherein the method further comprises:
ranking each of the subset of the one or more regions based on at least one of the dimensions of each region, a location of each region, or content of the supplemental content; and
determining, based on the ranking, one of the subset of the one or more regions to display the supplemental content.

12. The method of claim 1, wherein the method further comprises:
determining a plurality of portions of the supplemental content;
matching each of the plurality of portions of the supplemental content to one of the subset of the one or more regions; and
generating for display each of the plurality of portions of the supplemental content on the corresponding one of the subset of the one or more regions.

13. A system comprising:
means for monitoring one or more regions near a user device;
means for determining, based on the monitoring, dimensions for each of one or more regions near the user device;
means for retrieving supplemental content associated with a scene of a media asset being presented on the user device;
means for identifying dimensions of the supplemental content;
means for comparing the dimensions of the supplemental content to the dimensions for each of the one or more regions;
means for filtering, based on the comparing, a subset of the one or more regions; and
means for transmitting the supplemental content for display in the subset of the one or more regions near the user device.

14. A system comprising means for executing the steps of the method of any of claims 2-12.

15. A non-transitory computer-readable medium having instructions encoded thereon that when executed by control circuitry enable the control circuitry to execute the steps of the method of any of claims 1-12.
